# EUROPÄISCHE PATENTANMELDUNG

(11) **EP 4 253 493 A1**
(43) Veröffentlichungstag der Anmeldung: **04.10.2023**
(21) Anmeldenummer: 23165662.0
(22) Anmeldetag: 30.03.2023
(51) Int. Cl.: C09J 7/38

(54) **KLEBEBAND ZUR VERKLEBUNG AUF LACKEN**

(30) Priorität: 31.03.2022 DE 102022107748
(71) Anmelder: tesa SE, 22848 Norderstedt (DE)
(72) Erfinder: DOLLASE, Thilo, 22848 Norderstedt (DE); PÖHLS, Jan Ole, 22848 Norderstedt (DE); BEFUß, Julia, 22848 Norderstedt (DE); GARBERS, Julia, 22848 Norderstedt (DE)
(74) Vertreter: tesa SE

(57) **Zusammenfassung**

Es sollte ein Klebeband mit guter Eignung zur Verklebung auf Klarlacken zur Verfügung gestellt werden, das eine anforderungsgerechte Verklebungsfestigkeit und gute Scherfestigkeit auch bei hohen Temperaturen aufweist. Bei Verwendung des Klebebands auf Klarlacken sollte eine vorherige, Lösemittel nutzende Reinigung der Lackoberfläche nicht erforderlich sein, das Klebeband sollte aber dennoch ein gutes klebtechnisches Leistungsprofil auf dem Klarlack zeigen. Dies gelingt mit einem Klebeband zur Verklebung auf einem Lack, das
- eine Trägerschicht (T), und
- eine im Aufbau des Klebebandes außen angeordnete Haftklebmasseschicht (H) umfasst, wobei die Haftklebmasseschicht (H)
o (H1) mindestens ein Polymer ausgewählt aus Poly(meth)acrylaten und Polydien-Blockcopolymeren oder mindestens einen Blend aus mindestens einem Poly(meth)acrylat und mindestens einem Polydien-Blockcopolymer; und
o (H2) eine Klebharzkomponente, umfassend mindestens ein Terpenphenolharz
umfasst;
und das dadurch gekennzeichnet ist, dass das Terpenphenolharz eine Erweichungstemperatur, bestimmt mit der Ring-and-Ball-Methode gemäß ASTM E28, von maximal 140 °C aufweist.

## Beschreibung

Die vorliegende Erfindung betrifft das technische Gebiet der Klebebänder, wie sie vielfach zur Herstellung von temporären oder auch dauerhaften Verklebungen in verschiedensten Bereichen der Technik eingesetzt werden. Spezifischer schlägt die Erfindung ein Klebeband mit einer Trägerschicht und einer Schicht einer Haftklebmasse auf Poly(meth)acrylat- und/oder Polydien-Blockcopolymer-Basis mit einem Terpenphenolharz vor, welches durch seine maximale Erweichungstemperatur gekennzeichnet ist. Das Klebeband soll zur Verklebung auf Lacken verwendbar sein.

Klebstoffe und Klebebänder werden im Allgemeinen verwendet, um zwei Substrate zusammenzufügen, so dass eine temporäre oder permanente Verbindung entsteht. Spezielle Klebebandprodukte weisen eine Schaumschicht auf und werden beispielsweise in der Automobilindustrie zur permanenten Verklebung von Bauteilen an der Karosserie oder im Motorbereich verwendet. Typische Beispiele hierfür sind die Emblemverklebung sowie das Fixieren von Kunststoffteilen und Gummitürdichtungen. Die Karosserie ist typischerweise mit einem Lack versehen, insbesondere mit einem Klarlack, auf dem die Verklebung erfolgen soll.

Beispiele für Selbstklebebänder für die Verklebung von Teilen auf Automobillacken sind in WO 2008/070386 A1 und in US 4,415,615 A offenbart.

Trotz einer Vielzahl an Klebstoffen und Klebebändern ist aufgrund von neuartigen Lacken, der grundsätzlich hohen Vielfalt beispielsweise an verschiedenartigen Klarlacken sowie steigenden Anforderungen bei der Endanwendung die Notwendigkeit gegeben, neue Haftklebmassen, Formulierungen und Klebebanddesigns zu entwickeln. Zu den im Automobilbereich typischen Klarlacken zählen sogenannte 1K- und 2K-Klarlacke, die lösemittel-, wasser- oder pulverbasierend sein können (H. Kittel, Lehrbuch der Lacke und Beschichtungen, Band 6, H. J. Streitberger (Hrsg.), 2. Aufl., 2008, S. Hirzel, Stuttgart, S. 437-441). Häufig werden sogenannte 2K-PU-Lacke genutzt. Selbst bekannte Klarlacke stellen zum Teil immer noch Herausforderungen an leistungsfähige Haftklebmassen dar, u.a. weil die Anforderungen stetig steigen, wie z. B. im Hinblick auf die Scherfestigkeit eines Klebeverbunds bei erhöhten Temperaturen. Zudem enthalten viele Klarlacke oberflächenaktive Additive, die die Verklebung auf solchen Lacken erschweren. Vor einer Klebebandapplikation auf einem Klarlack ist es üblich, dass die Klarlackoberfläche vorgereinigt werden muss. Diese Vorreinigung wird in sehr anschaulicher Weise durch Horgnies et al. illustriert (J. Adhes. Sci. Techn., 2004, 18(9), 1047-1061) und erfolgt typischerweise unter Nutzung von Lösemittel wie hier Ethanol.

Es besteht insoweit die Anforderung an ein Selbstklebebandprodukt, zum einen eine verbesserte Haftung auch auf herausfordernden Klarlacken aufzuweisen und zum anderen auch unter extremen klimatischen Bedingungen ein hervorragendes Leistungsprofil zu bewahren.

Zusätzlich muss ein Klebeband auch den Herstellungs- und Verarbeitungsprozessen beispielsweise in der Automobilindustrie gerecht werden. Aufgrund fortschreitender Automatisierung von Produktionsprozessen sowie des Wunsches nach ökonomischeren Fertigungsweisen muss das Klebeband, sobald es an der richtigen Stelle platziert ist, eine genügend hohe Adhäsion aufweisen und teilweise auch hohe Scherkräfte aushalten. Hierzu ist es von Vorteil, wenn die Klebebänder einen hohen Tack zeigen und die Klebmassen auf diversen Untergründen schnell aufließen, so dass in kürzester Zeit eine gute Benetzung und somit hohe Klebkräfte erreicht werden. Bevorzugt werden insgesamt Klebebänder, die ohne vorherige Vorbehandlung der Zieloberfläche appliziert werden können, ohne dass stärkere Leistungseinbußen toleriert werden müssen.

Verschiedene Klebmassen und Klebebänder sind für die Verklebung auf Automobillacken beschrieben worden.

EP 0 349 216 A1 und EP 0 352 901 A1 beschreiben zweiphasige Blends bestehend aus einem Polyacrylat und einem Synthesekautschuk, bevorzugt einem Styrolblockcopolymer, welche besonders für die Verklebung auf Farben und Lacken ausgelobt werden.

EP 2 226 369 A1 beschreibt ein Klebeband, welches einen viskoelastischen Acrylatschaumträger aufweist, der mit mindestens einer Haftklebmasseschicht kaschiert ist. Die Haftklebmasse enthält einen chemisch vernetzten Kautschuk, bevorzugt einen mittels Elektronenstrahlhärtung vernetzten Synthesekautschuk. Die beschriebenen Klebebänder zeigen sowohl gute Klebkräfte auf verschiedenen Farb- und Lackschichten als auch eine ausreichende Kohäsion bei hohen Temperaturen. Als einsetzbare Kautschuke werden allgemein Polyvinylaromat-Polydien-Blockcopolymere und hydrierte Derivate genannt. Die Haftklebmasse kann auch Klebharze enthalten, von denen verschiedene Typen genannt werden.

DE 10 2012 212 883 A1 offenbart Klebebänder mit einem viskoelastischen Acrylatschaumträger und zumindest einer darauf aufgebrachten Klebeschicht auf Basis eines Gemischs von Synthesekautschuken. Hervorgehoben werden Polyvinylaromat-Polydien-Blockcopolymere und hydrierte Derivate. Explizit beschrieben werden neben Formulierungen mit Polystyrol-Polyisopren-Blockcopolymeren auch solche basierend auf Polystyrol-Polybutadien-Blockcopolymeren. Die Formulierung für die Klebeschicht enthält zumindest ein Klebharz, das nicht mit Polyacrylat verträglich ist.

Weitere Beispiele für Selbstklebebänder mit einem Schaumträger und darauf befindlicher Haftklebmasse auf Synthesekautschukbasis sind in EP 1 417 255 A1 und in WO 2008/073669 A1 beschrieben. Beide Schriften offenbaren allgemein verschiedene Klebharze für die Kombination mit Polyvinylaromat-Polydien-Blockcopolymeren. Auch EP 3 243 886 A1 und EP 3 336 153 A1 listen verschiedene Klebharztypen auf.

EP 2 848 665 A1 beschreibt Klebebänder, die eine Haftklebmasseschicht und eine viskoelastische Trägerschicht umfassen. Die Haftklebmasseschicht basiert auf einem Blockcopolymer einer Monovinyl-substituierten aromatischen Verbindung und einem konjugierten Dien, wobei das Basispolymer 30 Gew.-% oder mehr Diblock-Anteil aufweist. Die viskoelastische Schicht hat eine Dicke von 20 µm oder mehr.

WO 2015/195616 A1 offenbart ein Klebeband mit einer Haftklebmasse, die mindestens ein Naturkautschuk- und/oder Synthesekautschuk-Elastomer und ein polares, phenolisches Klebharz umfasst. Es werden reversible Klebmassen beschrieben, die nach relativ kurzer Einsatzdauer wieder vom Untergrund ablösbar sein sollen, weshalb eine Vorreinigung des Verklebungsuntergrunds als nicht erforderlich angesehen wird.

DE 10 2019 216 938 A1 offenbart eine geschäumte Haftklebmasseschicht, enthaltend
a) 41,7 Gew.-% bis 62,0 Gew.-% einer Elastomerkomponente,
b) 37,7 Gew.-% bis 58,0 Gew.-% einer Klebharzkomponente,
c) 0 Gew.- % bis 15 Gew.-% einer Weichharzkomponente,
d) 0 Gew.-% bis 18 Gew.-% weitere Additive und
e) Mikroballons mit einem Anteil von vorzugsweise 0,3 Gew.-% bis 2,5 Gew.-%,

wobei die Mikroballons zumindest teilweise expandiert sind,
wobei die Elastomerkomponente (a) zu mindestens 90 Gew.-% aus Polyvinylaromat-Polydien-Blockcopolymer besteht,
wobei die Klebharzkomponente (b) zu 4 Gew.-% bis 100 Gew.-% zumindest eine Sorte eines Kolophoniumoligomers mit einer Erweichungstemperatur (Ring & Ball) von mindestens 90 °C enthält und
wobei die Dichte der geschäumten Haftklebemasseschicht bei mindestens 600 kg/m³ und höchstens 920 kg/m³ liegt.

Blends aus Poly(meth)acrylat und Polyvinylaromat-Polydien-Blockcopolymeren als Grundlage für Haftklebmassen, die mit einem geschäumten Träger als Klebeband verwendet werden, sind aus EP 3 228 674 A1 bekannt. Die Haftklebmassen enthalten zu mindestens 10 Gew.-% ein klebkraftverstärkendes Harz.

Die schon erwähnte EP 3 336 153 A1 führt zudem ein typisches Vorgehen bei der Applikation von Klebebändern auf Klarlacken aus, bei dem der Klarlack vor der Klebebandapplikation mit Lösemittel gereinigt und trockengewischt wird. Dieser Vorgang ist in einem reellen Anwendungsprozess aufwändig und reduziert die Effizienz der Produktionsabläufe.

Eine allgemeine Aufgabe der Erfindung war es vor dem geschilderten Hintergrund, ein Klebeband mit guter Eignung zur Verklebung auf Klarlacken zur Verfügung zu stellen, das eine anforderungsgerechte Verklebungsfestigkeit bietet.

Eine weitere Aufgabe der Erfindung war es, das Klebeband so auszugestalten, dass es darüber hinaus eine hervorragende Scherfestigkeit auch bei hohen Temperaturen aufweist.

Es war eine weitere Aufgabe der Erfindung, ein Klebeband zur Verfügung zu stellen, bei dessen Verwendung auf Klarlacken eine vorherige, Lösemittel nutzende Reinigung der Lackoberfläche nicht erforderlich ist, das aber dennoch ein gutes klebtechnisches Leistungsprofil auf dem Klarlack zeigt, insbesondere im Sinne der vorstehend genannten Eigenschaften.

Der Lösung der Aufgabe liegt der Gedanke zugrunde, ein Klebeband mit Trägermaterial und Haftklebmasseschicht einzusetzen und in der Haftklebmasseschicht ein spezielles Terpenphenolharz zu verwenden. Ein erster und allgemeiner Gegenstand der Erfindung ist ein Klebeband zur Verklebung auf einem Lack, das
- eine Trägerschicht (T), und
- eine im Aufbau des Klebebandes außen angeordnete Haftklebmasseschicht (H) umfasst, wobei die Haftklebmasseschicht (H)
   ∘ (H1) mindestens ein Polymer ausgewählt aus Poly(meth)acrylaten und Polydien-Blockcopolymeren oder mindestens einen Blend aus mindestens einem Poly(meth)acrylat und mindestens einem Polydien-Blockcopolymer; und
   ∘ (H2) eine Klebharzkomponente, umfassend mindestens ein Terpenphenolharz
   umfasst;
und das dadurch gekennzeichnet ist, dass das Terpenphenolharz eine Erweichungstemperatur, bestimmt mit der Ring-and-Ball-Methode gemäß ASTM E28, von maximal 140 °C aufweist.

Wie sich gezeigt hat, lassen sich die Aufgaben der Erfindung mit einem solchen Klebeband lösen. Insbesondere hat sich herausgestellt, dass sich mit einem erfindungsgemäßen Klebeband auch auf verschmutzten Klarlacken zufriedenstellende Verklebungen herstellen ließen, ohne dass eine vorangehende Reinigung der Lackoberfläche mit Lösemittel nötig war. Es hat sich vielmehr als ausreichend herausgestellt, die Lackoberfläche einfach mit einem trockenen Tuch abzuwischen. Die Oberfläche kann somit auf eine viel einfachere und Material sparende Weise für die Verklebung vorbereitet werden.

Unter einer Haftklebmasse wird im Einklang mit dem allgemeinen Verständnis eine Klebmasse verstanden, die bereits unter relativ schwachem Andruck eine dauerhafte Verbindung mit fast allen Haftgründen erlaubt und ggf. nach Gebrauch im Wesentlichen rückstandsfrei vom Haftgrund wieder abgelöst werden kann. Eine Haftklebmasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebmasse beruht auf ihren adhäsiven Eigenschaften und die Wiederablösbarkeit auf ihren kohäsiven Eigenschaften.

### Haftklebmasseschicht (H)

Die Haftklebmasse der Schicht (H) kann mehrere Phasen aufweisen. In einer Ausführungsform weist zumindest eine Phase eine Glasübergangstemperatur (nach Test VIII) von maximal 20 °C auf, bevorzugt von maximal -20 °C. Besonders bevorzugt bildet diese Phase die Majoritätsphase, d. h. ihr Volumenanteil ist größer als die Summe der Volumenanteile aller Phasen mit einer Erweichungstemperatur oberhalb 25 °C. Bevorzugt bildet diese Phase eine kontinuierliche Phase innerhalb der Haftklebmasseschicht (H).

### Komponente (H1)

Die Haftklebmasseschicht (H) umfasst erfindungsgemäß mindestens ein Polymer ausgewählt aus Poly(meth)acrylaten und Polydien-Blockcopolymeren oder mindestens einen Blend aus mindestens einem Poly(meth)acrylat und mindestens einem Polydien-Blockcopolymer. Derartige Polymere oder Blends sind in der Schicht (H) bevorzugt zu insgesamt mindestens 30 Gew.-%, stärker bevorzugt zu insgesamt mindestens 40 Gew.-% und sehr bevorzugt zu insgesamt mindestens 50 Gew.-% enthalten und bilden somit bevorzugt die Matrix bzw. das Grundgerüst der Haftklebmasseschicht, das wesentlich deren Eigenschaften bestimmt. Die Haftklebmasseschicht (H) umfasst somit bevorzugt zu insgesamt mindestens 40 Gew.-%, bezogen auf das Gesamtgewicht der Haftklebmasseschicht (H), mindestens ein Polymer ausgewählt aus Poly(meth)acrylaten und Polydien-Blockcopolymeren oder mindestens einen Blend aus mindestens einem Poly(meth)acrylat und mindestens einem Polydien-Blockcopolymer.

Sofern im Folgenden vereinfachend von mehreren Polymeren der Haftklebmasseschicht (H) die Rede ist, gilt ausdrücklich immer auch der Fall als von diesem Ausdruck eingeschlossen, dass die Haftklebmasseschicht (H) nur ein einziges Polymer umfasst.

### (H1a) Polydien-Blockcopolymer

In einer Ausführungsform der Erfindung umfasst die Haftklebmasseschicht (H) mindestens ein Polydien-Blockcopolymer. Bevorzugt sind in dieser Ausführungsform mindestens 90 Gew.-% aller Polymere der Haftklebmasseschicht (H) Polydien-Blockcopolymere.

Die Dien-Blockcopolymere der Schicht (H) sind bevorzugt Polyvinylaromat-Polydien-Blockcopolymere, wobei das Polydien bevorzugt auf ein konjugiertes Dien, insbesondere auf ein 1,3-Dien zurückgeführt werden kann. Der mittlere Diblock-Anteil der Polyvinylaromat-Polydien-Blockcopolymere, bezogen auf die Gesamtheit aller Polyvinylaromat-Polydien-Blockcopolymere der Schicht (H), beträgt bevorzugt maximal 40 Gew.-%. Die Polydienblöcke der Polyvinylaromat-Polydien-Blockcopolymere weisen bevorzugt einen mittleren Vinyl-Anteil (Test IX) von weniger als 20 Gew.-%, stärker bevorzugt von weniger als 17 Gew.-%, insbesondere von weniger als 13 Gew.-%, jeweils bezogen auf die Gesamtheit aller Polydienblöcke der Schicht (H), auf. Bevorzugt sind, jeweils bezogen auf die Gesamtheit aller Polyvinylaromat-Polydien-Blockcopolymere der Schicht (H), Polyvinylaromat-Polydien-Blockcopolymere mit einer Peakmolmasse (Test Ia) von mindestens 125.000 g/mol, stärker bevorzugt von mindestens 200.000 g/mol, insbesondere von mindestens 250.000 g/mol, zu mindestens 30 Gew.-%, bevorzugt zu mindestens 40 Gew.-%, stärker bevorzugt zu mindestens 50 Gew.- % und sehr bevorzugt zu mindestens 60 Gew.-% und bevorzugt zu höchstens 90 Gew.-%, in der Schicht (H) enthalten.

Die Polyvinylaromat-Polydien-Blockcopolymere der Haftklebmasseschicht (H) liegen bevorzugt in einem Aufbau der Form A-B-A, (A-B)ₙ , (A-B)ₙX oder (A-B-A)ₙX vor, worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation eines oder mehrerer konjugierter Diene mit 4 bis 18 C-Atomen;
- X für den Rest eines Kopplungsreagenzes oder multifunktionellen Initiators und
- n für eine ganze Zahl ≥ 2 stehen.

Die Polyvinylaromat-Polydien-Blockcopolymere umfassen also bevorzugt jeweils einen oder mehrere gummiartige Blöcke B (Elastomerblöcke, Weichblöcke) und mindestens zwei glasartige Blöcke A (Hartblöcke). Besonders bevorzugt ist in der hier beschriebenen Ausführungsform mindestens ein Polyvinylaromat-Polydien-Blockcopolymer ein Blockcopolymer mit einem Aufbau A-B-A, (A-B)₂X, (A-B)₃X oder (A-B)₄X, wobei für A, B und X die vorstehenden Bedeutungen gelten.

Es können alle Polyvinylaromat-Polydien-Blockcopolymere der Haftklebmasseschicht (H) einem Aufbau A-B-A, (AB)₂X, (A-B)₃X oder (A-B)₄X entsprechen, wobei für A, B und X die vorstehenden Bedeutungen gelten. Bevorzugt weist zumindest ein Triblockcopolymer oder höheres Multiblockcopolymer (linear oder mehrarmig, radial, sternförmig) eine Peakmolmasse von mindestens 125.000 g/mol auf.

Die Haftklebmasseschicht (H) kann zudem ein oder mehrere Diblockcopolymere A-B enthalten. Ein zu hoher Anteil an Diblockcopolymeren wirkt sich jedoch in der Regel negativ auf die Wärmescherfestigkeit aus. Ihr Anteil in der Haftklebmasseschicht sollte daher nicht zu hoch sein. Besonders bevorzugt beträgt der mittlere Diblock-Anteil der Polyvinylaromat-Polydien-Blockcopolymere, bezogen auf die Gesamtheit aller Polyvinylaromat-Polydien-Blockcopolymere der Schicht (H), maximal 40 Gew.-%, insbesondere maximal 30 Gew.-% und ganz besonders bevorzugt maximal 25 Gew.-%.

Insbesondere umfasst die Haftklebmasseschicht (H) des erfindungsgemäßen Klebebands ein Gemisch aus Polyvinylaromat-Polydien-Blockcopolymeren mit einem Aufbau A-B, AB-A, (A-B)₃X oder (A-B)₄X, das besonders bevorzugt ein radiales Blockcopolymer und/oder Triblockcopolymere A-B-A umfasst. Ebenfalls bevorzugt ist ein Gemisch aus Triblockcopolymeren und (A-B)ₙ - oder (A-B)ₙX-Blockcopolymeren mit n größer/gleich 3.

Die aus den A- und B-Blöcken resultierenden Blockcopolymere können grundsätzlich gleiche oder unterschiedliche B-Blöcke enthalten.

Die Blockcopolymere können lineare A-B-A-Strukturen aufweisen, von radialer Gestalt sein und sternförmige und lineare Multiblockcopolymere umfassen.

Vinylaromaten zum Aufbau des Blocks A umfassen bevorzugt Styrol und Styrol-Derivate, besonders bevorzugt Styrol und α-Methylstyrol. Der Block A kann somit als Homo- oder Copolymer vorliegen. Besonders bevorzugt ist der Block A ein Polystyrolblock. Anstelle der bevorzugten Polystyrolblöcke können als Vinylaromaten aber auch Polymerblöcke auf Basis anderer aromatenhaltiger Homo- und Copolymere, bevorzugt von C8 - bis C12 - Aromaten, mit Glasübergangstemperaturen von größer 75 °C genutzt werden, zum Beispiel α-Methylstyrol-haltige Aromatenblöcke. Die Polyvinylaromat-Polydien-Blockcopolymere können gleiche oder unterschiedliche A-Blöcke enthalten.

Bevorzugt haben die Polyvinylaromat-Polydien-Blockcopolymere Polystyrolendblöcke.

Die Monomere für den Weichblock B sind bevorzugt konjugierte Diene, insbesondere solche ausgewählt aus der Gruppe bestehend aus Butadien, Isopren, Ethylbutadien, Phenylbutadien, Piperylen, Pentadien, Hexadien, Ethylhexadien, Farnesen und Dimethylbutadien sowie beliebigen Mischungen dieser Monomere. Auch der Block B kann als Homopolymer oder als Copolymer vorliegen.

Besonders bevorzugt sind die Monomere für den Weichblock B ausgewählt aus Butadien und Isopren. Beispielsweise ist der Weichblock B ein Polyisoprenblock oder ein Polybutadienblock oder ein Polymerblock aus einem Gemisch aus Butadien und Isopren. Ganz besonders bevorzugt ist der Block B ein Polybutadien.

A-Blöcke werden im Kontext der vorliegenden Erfindung auch als "Hartblöcke" bezeichnet. B-Blöcke werden entsprechend auch "Weichblöcke" oder "Elastomerblöcke" genannt. Dies spiegelt die Auswahl der Blöcke entsprechend ihrer Glasübergangstemperaturen wider, die für die A-Blöcke bevorzugt mindestens 25 °C, insbesondere mindestens 50 °C und für die B-Blöcke bevorzugt maximal 0 °C, insbesondere maximal -25 °C betragen. Diese Angaben beziehen sich auf die reinen, unabgemischten Blockcopolymere und werden erfindungsgemäß mittels DSC (Test VIII) ermittelt.

Der Anteil an Hartblock in den Polyvinylaromat-Polydien-Blockcopolymeren liegt bevorzugt bei mindestens 12 Gew.-% und maximal bei 40 Gew.-%, stärker bevorzugt bei mindestens 15 Gew.-% und maximal bei 35 Gew.-% und insbesondere bei mindestens 20 Gew.-%.

Bevorzugt beträgt der Anteil der Gesamtheit aller Polyvinylaromat-Polydien-Blockcopolymere, bezogen auf die gesamte Haftklebmasse, mindestens 30 Gew.-% und maximal 60 Gew.-%, stärker bevorzugt mindestens 40 Gew.-% und maximal 55 Gew.-%, insbesondere mindestens 45 Gew.-% und maximal 52 Gew.-%. Es wurde festgestellt, dass ein zu geringer Anteil an Polyvinylaromat-Polydien-Blockcopolymeren zur Folge hat, dass die Wärmescherfestigkeit der Haftklebmasseschicht sinkt. Ein zu hoher Anteil an Polyvinylaromat-Polydien-Blockcopolymeren hat wiederum zur Folge, dass die Haftklebmasseschicht an Klebvermögen verliert.

Die aus den A- und B-Blöcken resultierenden Blockcopolymere können gleiche oder unterschiedliche B-Blöcke enthalten, auch im Hinblick auf die Mikrostruktur. Mit "Mikrostruktur" ist das relative Verhältnis der für Polybutadien, Polyisopren oder ein anderes konjugiertes Dien, insbesondere 1,3-Dien, möglichen Monomerverknüpfungsarten 1,4-cis (in Polybutadien und Polyisopren), 1,4-trans (in Polybutadien und Polyisopren), 1,2 (in Polybutadien und Polyisopren) und 3,4 (in Polyisopren) gemeint. Bevorzugt beträgt der 1,4-Anteil (cis + trans) > 80 Gew.-%, stärker bevorzugt > 85 Gew.-%, jeweils bezogen auf die Polydienblöcke und der 1,4-cis-Anteil > 40 Gew.-%, bezogen auf die Polydienblöcke; entsprechend beträgt der Anteil an 1,2- und/oder etwaig vorhandenen 3,4-verknüpften Monomere in Summe, d.h. der sogenannte Vinyl-Anteil, bestimmt nach Test IX, bevorzugt weniger als 20 Gew.-%, stärker bevorzugt maximal 17 Gew.%, insbesondere höchstens 13 Gew.-%. Ein hoher Anteil an 1,4-Verknüpfung und insbesondere 1,4-cis-Verknüpfung der Monomereinheiten in den Polydien-Blöcken bzw. ein geringer Anteil an Vinyl-Gruppen führt zu einer geringeren Glasübergangstemperatur, so dass eine gute Schockbeständigkeit auch in kalter Umgebung erreicht werden kann. Polybutadien ist auch aus diesem Grund ein bevorzugtes Monomer für den B-Block bzw. die B-Blöcke. In einer alternativen Ausführungsform beziehen sich die quantitativen Angaben zu den Monomerverknüpfungsarten, wie insbesondere zum Vinylanteil, anstelle von Gew.-% auf mol-%.

Kommerziell erhältliche Blockcopolymer-Typen weisen häufig eine Kombination aus Polymeren unterschiedlicher Architektur auf. So enthält beispielsweise Kraton^{®} D1101, nominell ein lineares Polystyrol-Polybutadien-Triblockcopolymer, gemäß Herstellerangabe (The Global Connection for Polymer and Compound Solution - Product and Application Guide, Kraton Performance Polymers, 2011) zu 16 Gew.-% ein Diblockcopolymer. Kraton^{®} D1118 dagegen, ein anderes Polystyrol-Polybutadien-Blockcopolymer, enthält zu 78 Gew.-% ein Diblockcopolymer. Die obigen Angaben zur Molmasse der Blockcopolymere beziehen sich jeweils auf diejenige Polymermode, die der in dem entsprechenden Zusammenhang genannten Blockcopolymerarchitektur von einem Fachmann zugeordnet werden kann. Angaben zur Molmasse sind in diesem Zusammenhang als Peakmolmasse zu verstehen. GPC (Test I) erlaubt üblicherweise die Feststellung der Molmasse der einzelnen Polymermoden in einer Mischung aus verschiedenen Blockcopolymeren.

### (H1b) Poly(meth)acrylat

In einer Ausführungsform der Erfindung umfasst die Haftklebmasseschicht (H) mindestens ein Poly(meth)acrylat. Bevorzugt sind in dieser Ausführungsform mindestens 90 Gew.-% aller Polymere der Haftklebmasseschicht (H) Poly(meth)acrylate. Es können ein (einziges) Poly(meth)acrylat oder mehrere Poly(meth)acrylate enthalten sein. Unabhängig davon, ob im Folgenden die Ausdrücke "das Poly(meth)acrylat" oder "die Poly(meth)acrylate" verwendet werden, sind stets ein einziges oder mehrere Poly(meth)acrylate als Bestandteil der Haftklebmasseschicht (H) gemeint.

Unter einem "Poly(meth)acrylat" wird ein Polymer verstanden, welches insbesondere durch radikalische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Die Glasübergangstemperatur des Poly(meth)acrylats der Haftklebmasseschicht (H) beträgt bevorzugt < 0 °C, stärker bevorzugt zwischen -20 und -50 °C. Die Glasübergangstemperatur von Polymeren oder von Polymerblöcken in Blockcopolymeren wird erfindungsgemäß mittels Dynamischer Scanning Kalorimetrie (DSC) bestimmt.

Bevorzugt enthält das Poly(meth)acrylat zumindest ein anteilig einpolymerisiertes funktionelles, besonders bevorzugt mit Epoxidgruppen unter Ausbildung einer kovalenten Bindung reaktives Monomer. Ganz besonders bevorzugt enthält das anteilig einpolymerisierte funktionelle, besonders bevorzugt mit Epoxidgruppen unter Ausbildung einer kovalenten Bindung reaktive Monomer mindestens eine funktionelle Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen; insbesondere enthält es mindestens eine Carbonsäuregruppe. Äußerst bevorzugt enthält das Poly(meth)acrylat anteilig einpolymerisierte Acrylsäure und/oder Methacrylsäure. All die genannten Gruppen weisen eine Reaktivität mit Epoxidgruppen auf, wodurch das Poly(meth)acrylat vorteilhaft einer thermischen Vernetzung mit eingebrachten Epoxiden zugänglich wird.

Das Poly(meth)acrylat der Haftklebmasseschicht (H) kann bevorzugt auf die folgende Monomerzusammensetzung zurückgeführt werden:
a) mindestens ein Acrylsäureester und/oder Methacrylsäureester gemäß der folgenden Formel (1)

   CH₂=C(R^{I})(COOR^{II}) (1),

   worin R^{I} = H oder CH₃ und R^{II} ein Alkylrest mit 4 bis 18 C-Atomen ist;
b) mindestens ein olefinisch ungesättigtes Monomer mit mindestens einer funktionellen Gruppe ausgewählt aus der Gruppe bestehend aus Carbonsäuregruppen, Sulfonsäuregruppen, Phosphonsäuregruppen, Hydroxygruppen, Säureanhydridgruppen, Epoxidgruppen und Aminogruppen;
c) optional weitere Acrylsäureester und/oder Methacrylsäureester und/oder olefinisch ungesättigte Monomere, die mit der Komponente (a) copolymerisierbar sind.

Bevorzugt sind Monomere der Komponente a) zu einem Anteil von 45 bis 99 Gew.-%, Monomere der Komponente b) zu einem Anteil von 1 bis 15 Gew.-% und Monomere der Komponente c) zu einem Anteil von 0 bis 40 Gew.-% enthalten, wobei die Angaben auf die Monomermischung für das Basispolymer ohne Zusätze eventueller Additive wie Harze etc. bezogen sind.

Die Monomere der Komponente a) sind allgemein weichmachende, eher unpolare Monomere. Besonders bevorzugt ist R^{II} in den Monomeren a) ein verzweigter oder unverzweigter Alkylrest mit 4 bis 10 C-Atomen oder 2-Propylheptylacrylat oder 2-Propylheptylmethacrylat. Die Monomere gemäß der Formel (1) sind insbesondere ausgewählt aus der Gruppe bestehend aus n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, 2-Ethylhexylacrylat, 2-Ethylhexylmethacrylat, 2-Propylheptylacrylat und 2-Propylheptylmethacrylat.

Die Monomere der Komponente b) sind besonders bevorzugt ausgewählt aus der Gruppe bestehend aus Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, insbesondere 2-Hydroxyethylacrylat, Hydroxypropylacrylat, insbesondere 3-Hydroxypropylacrylat, Hydroxybutylacrylat, insbesondere 4-Hydroxybutylacrylat, Hydroxyhexylacrylat, insbesondere 6-Hydroxyhexylacrylat, Hydroxyethylmethacrylat, insbesondere 2-Hydroxyethylmethacrylat, Hydroxypropylmethacrylat, insbesondere 3-Hydroxypropylmethacrylat, Hydroxybutylmethacrylat, insbesondere 4-Hydroxybutylmethacrylat, Hydroxyhexylmethacrylat, insbesondere 6-Hydroxyhexylmethacrylat, Allylalkohol, Glycidylacrylat, Glycidylmethacrylat.

Beispielhafte Monomere der Komponente c) sind:
Methylacrylat, Ethylacrylat, n-Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 3-Methoxyacrylsäuremethylester, 3-Methoxybutylacrylat, 2-Phenoxyethylmethacrylat, Butyldiglykolmethacrylat, Ethylenglycolacrylat, Ethylenglycolmonomethylacrylat, Methoxypolyethylenglykolmethacrylat 350, Methoxypolyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluorethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid; N,N-Dialkyl-substituierte Amide wie beispielsweise N,N-Dimethylacrylamid und N,N-Dimethylmethacrylamid; N-Benzylacrylamid, N-Isopropylacrylamid, N-tert-Butylacrylamid, N-tert-Octylacrylamid, N-Methylolacrylamid, N-Methylolmethacrylamid, Acrylnitril, Methacrylnitril; Vinylether wie Vinylmethylether, Ethylvinylether, Vinylisobutylether; Vinylester wie Vinylacetat; Vinylhalogenide, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol; Makromonomere wie 2-Polystyrolethylmethacrylat (gewichtsmittleres Molekulargewicht Mw, bestimmt mittels GPC, von 4000 bis 13000 g/mol), Poly(methylmethacrylat)ethylmethacrylat (Mw von 2000 bis 8000 g/mol).

Monomere der Komponente c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Die Herstellung der Poly(meth)acrylate geschieht bevorzugt durch konventionelle radikalische Polymerisationen oder kontrollierte radikalische Polymerisationen. Die Poly(meth)acrylate können durch Copolymerisation der Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Bevorzugt werden die Poly(meth)acrylate durch Copolymerisation der Monomere in Lösungsmitteln, besonders bevorzugt in Lösungsmitteln mit einem Siedebereich von 50 bis 150 °C, insbesondere von 60 bis 120 °C, unter Verwendung von 0,01 bis 5 Gew.-%, insbesondere von 0,1 bis 2 Gew.-%, jeweils bezogen auf das Gesamtgewicht der Monomeren, an Polymerisationsinitiatoren hergestellt.

Prinzipiell eignen sich alle üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat und Benzpinacol. Bevorzugte radikalische Initiatoren sind 2,2'-Azobis(2-methylbutyronitril) (Vazo^{®} 67^{™} der Firma DuPont) oder 2,2'-Azobis(2-methylpropionitril) (2,2'-Azobisisobutyronitril; AIBN; Vazo^{®} 64^{™} der Firma DuPont).

Bevorzugte Lösungsmittel für die Herstellung der Poly(meth)acrylate sind Alkohole wie Methanol, Ethanol, n- und iso-Propanol, n- und iso-Butanol, insbesondere Isopropanol und/oder Isobutanol; Kohlenwasserstoffe wie Toluol und insbesondere Benzine eines Siedebereichs von 60 bis 120 °C; Ketone, insbesondere Aceton, Methylethylketon, Methylisobutylketon; Ester wie Essigsäureethylester sowie Gemische der vorstehend genannten Lösungsmittel. Besonders bevorzugte Lösungsmittel sind Gemische, die Isopropanol in Mengen von 2 bis 15 Gew.-%, insbesondere von 3 bis 10 Gew.-%, jeweils bezogen auf das eingesetzte Lösungsmittelgemisch, enthalten.

Die gewichtsmittleren Molekulargewichte M_{w} der Poly(meth)acrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Die Poly(meth)acrylate haben vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität von Polymeren.

Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

Bevorzugt weist das Poly(meth)acrylat der Haftklebmasseschicht (H) eine Polydispersität PD < 4 und somit eine relativ enge Molekulargewichtsverteilung auf. Darauf basierende Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Poly(meth)acrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letztere besonders gut geeignet sind. Auch über N-Oxyle lassen sich entsprechende Poly(meth)acrylate herstellen. Ferner lässt sich in vorteilhafter Weise die Atom Transfer Radical Polymerization (ATRP) zur Synthese eng verteilter Poly(meth)acrylate einsetzen, wobei als Initiator bevorzugt monofunktionelle oder difunktionelle sekundäre oder tertiäre Halogenide und zur Abstraktion der Halogenide Cu-, Ni-, Fe-, Pd-, Pt-, Ru-, Os-, Rh-, Co-, Ir-, Ag- oder Au-Komplexe eingesetzt werden. Auch RAFT-Polymerisation ist geeignet.

Die Poly(meth)acrylate der Haftklebmasseschicht (H) sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die
- sowohl eine ausreichend lange Verarbeitungszeit gewährleisten, sodass es nicht zu einer Vergelung während des Verarbeitungsprozesses, insbesondere des Extrusionsprozesses, kommt,
- als auch zu einer schnellen Nachvernetzung des Polymers auf den gewünschten Vernetzungsgrad bei niedrigeren Temperaturen als der Verarbeitungstemperatur, insbesondere bei Raumtemperatur, führen. Bevorzugt werden thermische Vernetzer zu 0,1 bis 5 Gew.-%, insbesondere zu 0,2 bis 1 Gew.-%, bezogen auf die Gesamtmenge des zu vernetzenden Polymers, eingesetzt.

Auch eine Vernetzung über koordinative Vernetzer, auch als Komplexbildner oder Chelate bezeichnet, ist möglich. Als koordinative Vernetzer kommen insbesondere mehrwertige Metallchelatverbindungen in Frage. Unter dem Begriff "mehrwertige Metallchelatverbindung" werden solche Verbindungen verstanden, bei der ein mehrwertiges Metall koordinativ an eine oder mehrere organische Verbindungen gebunden ist. Als mehrwertiges Metallatom können Al(III), Zr(IV), Co(II), Cu(I), Cu(II), Fe(II), Fe(III), Ni(II), V(II), V(III), V(IV), V(V), Zn(II), In(III), Ca(II), Mg(II), Mn(II), Y(III), Ce(II), Ce(IV), St(II), Ba(II), Mo(II), Mo(IV), Mo(VI), La(III), Sn(II) Sn(IV), Ti(IV) und dergleichen eingesetzt werden. Von diesen sind Al(III), Zr(IV) und Ti(IV) bevorzugt.

Als Liganden der koordinativen Vernetzer können grundsätzlich alle bekannten Liganden dienen. Die für die koordinative Bindung der organischen Verbindung genutzten Atome können aber insbesondere solche Atome sein, die feie Elektronenpaare aufweisen, wie beispielweise Sauerstoffatome, Schwefelatome, Stickstoffatome und dergleichen. Als organische Verbindung können beispielsweise Alkylester, Alkoholverbindungen, Carbonsäureverbindungen, Etherverbindungen, Ketonverbindungen und dergleichen genutzt werden. Insbesondere seien Titanchelatverbindungen wie Titandipropoxidbis(acetylacetonat), Titandibutoxidbis(octylenglycholat), Titandipropoxid-bis(ethylacetoacetat), Titandipropoxidbis(lactat), Titandipropoxidbis(triethanolaminat), Titandi-n-butoxidbis(triethanolaminat), Titantri-n-butoxidmonostearat, Butyltitanatdimer, Poly(titanacetylacetonat) und dergleichen; Aluminiumchelat- Verbindungen wie Aluminiumdiisopropoxidmonoethylacetat, Aluminiumdi-n-butoxidmonomethylacetoacetat, Aluminiumdi-i-butoxidmonomethylacetoacetat, Aluminiumdi-n-butoxidmonoethylacetoacetat, Aluminiumdisec-butoxidmonoethylacetoacetat, Aluminiumtriacetylacetonat, Aluminiumtriethylacetoacetonat, Aluminiummonoacetylacetonatbis(ethylacetoacetonat) und dergleichen und Zirkoniumchelatverbindungen wie Zirkoniumtetraacetylacetonat und dergleichen veranschaulichend aufgeführt. Von diesen sind Aluminiumtriacetylacetonat und Aluminiumdipropoxid bevorzugt. Sie können allein oder in einer Kombination von zwei oder mehr Arten davon verwendet werden.

Bevorzugt sind die Poly(meth)acrylate zumindest kovalent mittels Epoxid(en) bzw. mittels einer oder mehrerer epoxidgruppenhaltigen Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole, insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche; Epoxyether mehrwertiger Phenole, insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon sowie deren Hydroxyethylether; Phenol-Formaldehyd-Kondensationsprodukte wie Phenolalkohole und Phenolaldehydharze; S- und N-haltige Epoxide, zum Beispiel N,N-Diglycidylanilin und N,N'-Dimethyldiglycidyl-4,4-Diaminodiphenylmethan; sowie Epoxide, welche nach üblichen Verfahren aus mehrfach ungesättigten Carbonsäuren oder einfach ungesättigten Carbonsäureestern ungesättigter Alkohole hergestellt worden sind; Glycidylester; Polyglycidylester, die durch Polymerisation oder Mischpolymerisation von Glycidylestern ungesättigter Säuren gewonnen werden können oder aus anderen sauren Verbindungen, zum Beispiel aus Cyanursäure, Diglycidylsulfid oder cyclischem Trimethylentrisulfon bzw. dessen Derivaten erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykoldiglycidether, Pentaerythrittetraglycidether, 1,6-Hexandioldiglycidether, Polypropylenglykoldiglycidether, Trimethylolpropantriglycidether, Pentaerythrittetraglycidether, Bisphenol-A-diglycidether und Bisphenol-F-diglycidether.

Weitere bevorzugte Epoxide sind cycloaliphatische Epoxide wie 3,4-Epoxycyclohexylmethyl-3,4-epoxycyclohexancarboxylat (UVACure1500).

Besonders bevorzugt sind die Poly(meth)acrylate mittels eines Vernetzer-Beschleuniger-Systems ("Vernetzungssystem") vernetzt, um eine bessere Kontrolle sowohl über die Verarbeitungszeit, die Vernetzungskinetik sowie den Vernetzungsgrad zu erhalten. Das Vernetzer-Beschleuniger-System umfasst bevorzugt zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltiger Verbindungen beschleunigend wirkende Substanz als Beschleuniger.

Als Beschleuniger werden besonders bevorzugt Amine eingesetzt. Diese sind formell als Substitutionsprodukte des Ammoniaks aufzufassen; in den folgenden Formeln sind die Substituenten durch "R" dargestellt und umfassen insbesondere Alkyl- und/oder Arylreste. Besonders bevorzugt werden solche Amine eingesetzt, die mit den zu vernetzenden Polymeren keine oder nur geringfügige Reaktionen eingehen.

Prinzipiell können als Beschleuniger sowohl primäre (NRH₂), sekundäre (NR₂H) als auch tertiäre Amine (NR₃) gewählt werden, selbstverständlich auch solche, die mehrere primäre und/oder sekundäre und/oder tertiäre Aminogruppen aufweisen. Besonders bevorzugte Beschleuniger sind tertiäre Amine wie beispielweise Triethylamin, Triethylendiamin, Benzyldimethylamin, Dimethylaminomethylphenol, 2,4,6-Tris-(N,N-dimethylaminomethyl)-phenol, N,N'-Bis(3-(dimethylamino)propyl)harnstoff. Weitere bevorzugte Beschleuniger sind multifunktionelle Amine wie Diamine, Triamine und/oder Tetramine, zum Beispiel Diethylentriamin, Triethylentetramin, Trimethylhexamethylendiamin.

Weitere geeignete Beschleuniger sind Pyridin, Imidazole wie beispielsweise 2-Methylimidazol und 1,8-Diazabicyclo[5.4.0]undec-7-en. Auch cycloaliphatische Polyamine können als Beschleuniger eingesetzt werden. Geeignet sind auch Beschleuniger auf Phosphorbasis wie Phosphine und/oder Phosphoniumverbindungen, beispielsweise Triphenylphosphin oder Tetraphenylphosphoniumtetraphenylborat.

Auch quartäre Ammoniumverbindungen können als Beschleuniger verwendet werden; Beispiele sind Tetrabutylammoniumhydroxid, Cetyltrimethylammoniumbromid und Benzalkoniumchlorid.

Die Vernetzung der Poly(meth)acrylate kann ergänzend oder alternativ auch strahlenchemisch, insbesondere durch UV-Strahlung oder Elektronenstrahlung, erfolgen.

### (H1c) Blend aus Poly(meth)acrylat und Polydien Blockcopolymer

In einer Ausführungsform der Erfindung umfasst die Haftklebmasseschicht (H) mindestens einen Blend aus mindestens einem Poly(meth)acrylat und mindestens einem Polydien-Blockcopolymer. Für das Poly(meth)acrylat bzw. die Poly(meth)acrylate sowie für das Polydien-Blockcopolymer bzw. die Polydien-Blockcopolymere des Blends gilt jeweils das vorstehend schon Gesagte. Insbesondere gelten alle in irgendeiner Weise für die Ausführungsformen, worin die Haftklebmasseschicht (H) mindestens ein Polydien-Blockcopolymer oder mindestens ein Poly(meth)acrylat umfasst, als bevorzugt beschriebenen Ausprägungen des Polydien-Blockcopolymers bzw. des Poly(meth)acrylats grundsätzlich auch für den Blend aus Polydien-Blockcopolymer und Poly(meth)acrylat als bevorzugt.

In der hier beschriebenen Ausführungsform haben die Polydien-Blockcopolymere bevorzugt einen Diblock-Anteil von mindestens 50 Gew.-%, stärker bevorzugt von mindestens 70 Gew.-%, jeweils bezogen auf die Gesamtheit aller Polydien-Blockcopolymere der Haftklebmasseschicht. Insbesondere weisen die Polydien-Blockcopolymere einen Aufbau A-B auf, liegen also als Diblockcopolymer vor

Bevorzugt umfasst die Haftklebmasseschicht (H) in der hier beschriebenen Ausführungsform ein oder mehrere Poly(meth)acrylate zu insgesamt mindestens 40 Gew.-% und ein oder mehrere Polydien-Blockcopolymere zu insgesamt mindestens 5 Gew.-%, stärker bevorzugt zu insgesamt 6 bis 30 Gew.-%, besonders bevorzugt zu insgesamt 7,5 bis 25 Gew.-%, insbesondere zu insgesamt 10 bis 22,5 Gew.-%. Die Gewichtsanteile sind jeweils auf das Gesamtgewicht der Haftklebmasseschicht (H) bezogen.

Das Gewichtsverhältnis der Gesamtheit an Poly(meth)acrylaten zur Gesamtheit an Polydien-Blockcopolymeren in der Haftklebmasseschicht (H) beträgt in der hier beschriebenen Ausführungsform (Blend) bevorzugt 2:1 bis 15: 1, stärker bevorzugt 2,2 : 1 bis 9,5 : 1, insbesondere 2,5 : 1 bis 7 : 1.

### (H2) Klebharzkomponente

Unter einem "Klebharz" wird entsprechend dem allgemeinen Fachmannverständnis ein oligomeres oder polymeres Harz verstanden, das die Adhäsion (den Tack, die Eigenklebrigkeit) der Haftklebemasse im Vergleich zu der kein Klebharz enthaltenden, ansonsten aber identischen Haftklebmasse erhöht.

Die Haftklebmasseschicht (H) umfasst erfindungsgemäß eine Klebharzkomponente, die ihrerseits mindestens ein Terpenphenolharz umfasst. Unter der "Klebharzkomponente" wird die Gesamtheit aller in der erfindungsgemäßen Haftklebmasseschicht enthaltenen klebkraftverstärkenden Harze verstanden. Der Anteil der Klebharzkomponente, bezogen auf das Gesamtgewicht der Haftklebmasseschicht (H), beträgt bevorzugt 35 bis 60 Gew.-%. Die Klebharzkomponente kann ein einziges oder mehrere Klebharze enthalten.

Die Klebharze sind bevorzugt so ausgewählt, dass sie mit solchen Phasen der Haftklebmasseschicht mischbar (verträglich, kompatibel) sind, die durch Strukturelemente der Basispolymere gebildet werden, welche durch eine Glasübergangstemperatur von maximal 0 °C, stärker bevorzugt von maximal -20 °C, insbesondere von maximal -40 °C (nach Test VIII) charakterisiert sind. Erfindungsgemäß ist zumindest ein Klebharz ein Terpenphenolharz, das eine Erweichungstemperatur von maximal 140 °C aufweist. Bevorzugt weist dieses Terpenphenolharz eine Erweichungstemperatur von mindestens 90 °C auf, stärker bevorzugt von mindestens 95 °C; ebenfalls bevorzugt von maximal 125 °C, insbesondere von < 120 °C. Die Erweichungstemperatur wird erfindungsgemäß nach der dem Fachmann bekannten "Ring-und-Kugel-Methode" gemäß ASTM E28 bestimmt. Bevorzugt weisen alle Klebharze der Klebharzkomponente (H2) der Haftklebmasseschicht (H), mithin sämtliche in der Haftklebmasseschicht (H2) enthaltenen Klebharze, eine Erweichungstemperatur, bestimmt mit der Ring-and-Ball-Methode gemäß ASTM E28, von maximal 140 °C, stärker bevorzugt von 90 °C bis 140 °C, insbesondere von maximal 125 °C, ganz besonders bevorzugt von < 120 °C auf.

Bevorzugt weist das mindestens eine Terpenphenolharz der Klebharzkomponente (H2) eine OH-Zahl von maximal 100 mg KOH / g, sehr bevorzugt von maximal 75 mg KOH / g auf.

Terpenphenolharze, die dem vorstehend aufgeführten Profil genügen, sind kommerziell verfügbar, zum Beispiel als Produkte der Reihe SYLVARES^{®} TP von Kraton Corp. oder als Produkte der Reihe Dertophene^{®} T von DRT.

In einer Ausführungsform umfasst die Klebharzkomponente neben dem mindestens einen Terpenphenolharz ein oder mehrere weitere Klebharze ausgewählt aus der Gruppe bestehend aus weiteren Terpenphenolharzen; Kolophoniumharzen, bevorzugt natürlichem Kolophonium, polymerisiertem Kolophonium, teilweise hydriertem Kolophonium, vollständig hydriertem Kolophonium, veresterten Produkten der vorgenannten Kolophoniumharze wie zum Beispiel Glycerinester, Pentaerythritester, Ethylenglycolester und Methylester, Disproportionierungs-Kolophonium, mit Fumarsäure modifiziertem Kolophonium und mit Kalk modifiziertem Kolophonium; hydrierten Polymerisaten des Dicyclopentadiens; partiell, selektiv oder vollständig hydrierten Kohlenwasserstoffharzen auf Basis von C5-, C5/C9- oder C9-Monomerströmen; Polyterpenharzen auf Basis von α-Pinen und/oder β-Pinen und/oder δ-Limonen und/oder Δ3-Caren; hydrierten Polymerisaten von C8- und C9-Aromaten; sowie Acrylat- und/oder Methacrylatharzen.

Die Harze können sowohl als bei Raumtemperatur feste als auch flüssige Harze zum Einsatz kommen. Um eine hohe Alterungs- und UV-Stabilität zu gewährleisten, sind hydrierte Harze mit einem Hydrierungsgrad von mindestens 90 %, vorzugsweise von mindestens 95 % bevorzugt, sofern mit der Polymermatrix kompatibel/verträglich.

Auf die Darstellung des Wissensstandes zu Klebharzen im "Handbook of Pressure Sensitive Adhesive Technology" von Donatas Satas (van Nostrand, 1989) wird ausdrücklich hingewiesen. Der Fachmann ist in der Lage, aus den genannten Harzen auf Basis von Verträglichkeitsüberlegungen zu einer gegebenen Polymerbasis der Haftklebmasseschicht (H) geeignete Klebharze und Kombinationen davon auszuwählen. Geeignete und bevorzugte Kombinationen von Polymer (H1) und Klebharzkomponente (H2) sind zum Beispiel die folgenden:
- (H1) umfassend mindestens ein Polystyrol-Polybutadien-Blockcopolymer oder mindestens einen Blend aus mindestens einem Poly(meth)acrylat und mindestens einem Polystyrol-Polybutadien-Blockcopolymer, (H2) umfassend mindestens ein Terpenphenolharz mit einer Erweichungstemperatur von maximal 140 °C und mindestens ein Polyterpenharz;
- (H1) umfassend mindestens ein Polystyrol-Polybutadien-Blockcopolymer oder mindestens einen Blend aus mindestens einem Poly(meth)acrylat und mindestens einem Polystyrol-Polybutadien-Blockcopolymer, (H2) umfassend mindestens ein Terpenphenolharz mit einer Erweichungstemperatur von maximal 140 °C

- (H1) umfassend mindestens ein Polystyrol-Polyisopren-Blockcopolymer oder mindestens einen Blend aus mindestens einem Poly(meth)acrylat und mindestens einem Polystyrol-Polyisopren-Blockcopolymer, (H2) umfassend mindestens ein Terpenphenolharz mit einer Erweichungstemperatur von maximal 140 °C und mindestens ein vollhydriertes Kohlenwasserstoffharz;
- (H1) umfassend mindestens ein Polystyrol-Polyisopren-Blockcopolymer oder mindestens einen Blend aus mindestens einem Poly(meth)acrylat und mindestens einem Polystyrol-Polyisopren-Blockcopolymer, (H2) umfassend mindestens ein Terpenphenolharz mit einer Erweichungstemperatur von maximal 140 °C
- (H1) umfassend mindestens ein Poly(meth)acrylat; (H2) umfassend mindestens ein Terpenphenolharz mit einer Erweichungstemperatur von maximal 140 °C und mindestens ein aromatisches Kohlenwasserstoffharz
- (H1) umfassend mindestens ein Poly(meth)acrylat; (H2) umfassend mindestens ein Terpenphenolharz mit einer Erweichungstemperatur von maximal 140 °C.

### (H3) Optionale Weichmacherkomponente

In einer Ausführungsform umfasst die Haftklebmasseschicht (H) ferner eine Weichmacherkomponente (H3); bevorzugt umfasst sie neben (H2) als (H1) mindestens ein Polyvinylaromat-Polydien-Blockcopolymer und (H3) eine Weichmacherkomponente. Unter der "Weichmacherkomponente" wird die Gesamtheit aller in der Haftklebmasseschicht (H) enthaltenen Weichmacher verstanden. Sofern umfasst, liegt die Weichmacherkomponente in der Haftklebmasseschicht (H) bevorzugt zu einem Anteil von maximal 15 Gew.-%, stärker bevorzugt von maximal 10 Gew.-%, insbesondere von maximal 5 Gew.-% vor. Die Weichmacherkomponente kann einen einzigen oder mehrere Weichmacher umfassen. Der bzw. die Weichmacher ist bzw. sind vorzugsweise ausgewählt aus der Gruppe bestehend aus Phthalaten, Kohlenwasserstoff-Ölen, Poly(iso)butene, Cyclohexandicarbonsäureestern, Weichharzen, Phosphaten oder Polyphosphaten. Unter den Weichharzen sind flüssige Harze, d. h. solche mit einer Erweichungstemperatur unter 30 °C, auf Basis von Terpenen, anderen Kohlenwasserstoffemonomeren (insbesondere C5 und/oder C9) und Kolophoniumderivaten bevorzugt.

Denkbar sind ferner (Co)Polymere, insbesondere amorphe (Co)polymere mit einer Glasübergangstemperatur von kleiner als 0 °C, deren Molmasse zwischen 10.000 und 1.000.000 g/mol betragen kann.

### (H4) weitere Zuschlagstoffe

Um die Eigenschaften der Haftklebmasseschicht (H) weitergehend und feiner einzustellen, kann die Haftklebmasseschicht über die bisher aufgeführten Komponenten hinaus weitere Additive enthalten. In einer Ausführungsform umfasst die Haftklebmasseschicht (H) 0,1 bis 18 Gew.-%, bevorzugt 0,5 bis 10 Gew.-% Additive. Die Haftklebmasseschicht kann ein einziges Additiv oder mehrere Additive umfassen.

Die weiteren Additive sind bevorzugt ausgewählt aus der Gruppe bestehend aus Alterungsschutzmitteln, insbesondere primären und sekundären Alterungsschutzmitteln; Lichtschutzmitteln; UV-Schutzmitteln; Flammschutzmitteln; Füllstoffen; Farbstoffen und Pigmente. Die Haftklebmasseschicht kann somit beliebig gefärbt oder weiß, grau oder schwarz sein.

Besonders bevorzugt umfasst die Haftklebmasseschicht ein oder mehrere Additive ausgewählt aus der Gruppe bestehend aus
- primären Antioxidantien, zum Beispiel sterisch gehinderten Phenolen, insbesondere zu einem Anteil von 0,2 bis 1 Gew.-% bezogen auf das Gesamtgewicht der Haftklebmasse;
- sekundären Antioxidantien, zum Beispiel Phosphiten und Thioethern, insbesondere zu einem Anteil von 0,2 bis 1 Gew.-% bezogen auf das Gesamtgewicht der Haftklebmasse;
- Prozessstabilisatoren, zum Beispiel C-Radikalfängern, insbesondere zu einem Anteil von 0,2 bis 1 Gew.-% bezogen auf das Gesamtgewicht der Haftklebmasse;
- Lichtschutzmitteln, zum Beispiel UV-Absorbern und sterisch gehinderten Aminen, insbesondere zu einem Anteil von 0,2 bis 1 Gew.-% bezogen auf das Gesamtgewicht der Haftklebmasse;
- Verarbeitungshilfsmitteln, insbesondere zu einem Anteil von 0,2 bis 1 Gew.-% bezogen auf das Gesamtgewicht der Haftklebmasse;
- Endblockverstärkerharzen in Kombination mit Komponenten H1a oder H1c, insbesondere zu einem Anteil von 0,2 bis 10 Gew.-% bezogen auf das Gesamtgewicht der Haftklebmasse; und
- weiteren Polymeren, insbesondere solchen von elastomerer Natur, zum Beispiel

- solchen auf Basis reiner Kohlenwasserstoffe, besonders bevorzugt ungesättigten Polydienen wie natürlichem oder synthetisch erzeugtem Polyisopren und Polybutadien;
- gesättigten Elastomeren, besonders bevorzugt gesättigten Ethylen-Propylen-Copolymeren, α-Olefincopolymeren, Polyisobutylen, Butylkautschuk und Ethylen-Propylenkautschuk; sowie
- chemisch funktionalisierten Kohlenwasserstoffen, besonders bevorzugt halogenhaltigen, acrylathaltigen und allyl- oder vinyletherhaltigen Polyolefinen, insbesondere zu einem Anteil von 0,2 bis 10 Gew.-% bezogen auf das Gesamtgewicht der Haftklebmasse.

### Trägerschicht (T)

In einer Ausführungsform umfasst die Trägerschicht (T) eine Folie. Bevorzugt ist die Folie ausgewählt aus der Gruppe bestehend aus Polyesterfolien, besonders bevorzugt biaxial verstreckten Polyesterfolien, insbesondere Folien auf Basis von Polyethylenterephthalat (PET), zum Beispiel von biaxial verstrecktem Polyethylenterephthalat; Folien aus monoaxial verstrecktem Polypropylen; Folien aus biaxial verstrecktem Polypropylen; Folien aus biaxial verstrecktem Polyethylen; und Folien aus Polyurethan. Bevorzugt besteht die Trägerschicht (T) aus einer Folie gemäß dem Vorstehenden.

Die Folie kann als hitzeaktivierbare Klebschicht bzw. hitzeaktivierbare Siegelschicht fungieren, also so ausgeprägt sein, dass sie unter Wärmeeinwirkung hinreichend erweicht, um mit einem Substrat, insbesondere einem Kunststoffsubstrat, eine Verbindung, insbesondere eine klebende oder stoffschlüssige Verbindung einzugehen, die nach dem Erkalten stabil und haltbar ist.

In einer weiteren Ausführungsform umfasst die Trägerschicht (T) einen Schaumträger und somit eine geschäumte Schicht. Bevorzugt besteht die geschäumte Schicht aus einem PE-Schaum, einem PU-Schaum oder einem Poly(meth)acrylatschaum. Dabei kann der Schaum jede bekannte Form von Schaumzellen aufweisen, also sowohl offenzellig als auch geschlossenzellig sein. Die Schäumung kann durch chemische oder physikalische Schäumungsmittel erzeugt worden sein, bevorzugt ist sie durch Einschlagen von Gas, besonders bevorzugt von Luft ("Frothing"), oder durch Einbringen von Hohlkugeln, bevorzugt von Glashohlkugeln, keramischen Hohlkugeln, Metallhohlkugeln und/oder expandierten, expandierbaren und/oder vorexpandierten Mikroballons erzeugt worden. Kombinationen vorstehend genannter Schäumungsmethoden sind grundsätzlich möglich.

Besonders bevorzugt ist die Trägerschicht (T) ein Schaumträger umfassend mindestens ein Poly(meth)acrylat als Matrixpolymer. Die Glasübergangstemperatur des Poly(meth)acrylats liegt bevorzugt unterhalb der Anwendungstemperatur des Klebebands, stärker bevorzugt unterhalb 0 °C, insbesondere unterhalb -20 °C. Das Poly(meth)acrylat weist somit bevorzugt einen viskoelastischen Charakter auf. Die Glasübergangstemperatur ist dabei als quasistatische Glasübergangstemperatur zu verstehen, die mittels DSC nach Test VIII ermittelt wird. Das Poly(meth)acrylat ist bevorzugt durch freie oder kontrollierte radikalische Polymerisation von (Meth)acrylsäure und einem oder mehreren (Meth)acrylsäureestern erhältlich und wird besonders bevorzugt thermisch vernetzt.

Besonders bevorzugt ist somit die Polymermatrix des Schaumträgers ein thermisch vernetztes Poly(meth)acrylat. Das Poly(meth)acrylat lässt sich bevorzugt auf eine Monomerenzusammensetzung bestehend aus
(a1) 70 bis 100 Gew.-% Acrylsäureestern und/oder Methacrylsäureestern gemäß der Strukturformel (I) 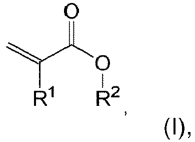
worin R¹ für H oder CH₃ steht und R² für eine Alkylkette mit 1 bis 14 C-Atomen steht; (a2) 0 bis 30 Gew.-% olefinisch ungesättigten Monomeren mit funktionellen Gruppen und
(a3) optional weiteren Acrylaten und/oder Methacrylaten und/oder olefinisch ungesättigten Monomeren, vorzugsweise mit einem Anteil zwischen 0 bis 5 Gew.-%, die mit (a1) und (a2) copolymerisierbar sind;
wobei mindestens eines der Monomere eine funktionelle Gruppe aufweist, die mittels eines Vernetzungsreagenzes eine kovalente Verknüpfung ausbilden kann, wobei sich die Gewichtsangaben auf das Gesamtgewicht der Monomerenzusammensetzung beziehen.

Die Monomere (a1) sind bevorzugt ausgewählt aus der Gruppe bestehend aus Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat; verzweigten Isomeren der vorstehend genannten (Meth)acrylate) wie 2-Ethylhexylacrylat; Cyclohexylmethacrylat, Isobornylacrylat und Isobornylmethacrylat. Der Anteil an Cyclohexylmethacrylat, Isobornylacrylat und Isobornylmethacrylat beträgt bevorzugt insgesamt maximal 20 Gew.-%, stärker bevorzugt insgesamt maximal 15 Gew.-%, jeweils bezogen auf die Gesamtheit der Monomere (a1).

Die Monomere (a2) sind bevorzugt ausgewählt aus der Gruppe bestehend aus Maleinsäureanhydrid, Itaconsäureanhydrid, Glycidylmethacrylat, Benzylacrylat, Benzylmethacrylat, Phenylacrylat, Phenylmethacrylat, tert-Butylphenylacrylat, tert-Butylphenylmethacrylat, Phenoxyethylacrylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat, Styrol, 4-Vinylpyridin, N-Vinylphthalimid, Methylstyrol und 3,4-Dimethoxystyrol.

Die Monomere (a3) sind bevorzugt ausgewählt aus der Gruppe bestehend aus Acrylsäure, Methacrylsäure, Hydroxyethylacrylat, 3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, N-tert-Butylacrylamid, N-Methylolmethacrylamid, N-(Butoxymethyl)methacrylamid, N-Methylolacrylamid, N-(Ethoxymethyl)acrylamid, N-Isopropylacrylamid, Vinylessigsäure, β-Acryloyloxypropionsäure, Trichloracrylsäure, Fumarsäure, Crotonsäure, Aconitsäure, Dimethylacrylsäure und 4-Vinylbenzoesäure.

Monomere der Komponente (a3) können darüber hinaus auch derart gewählt werden, dass sie funktionelle Gruppen enthalten, die eine nachfolgende strahlenchemische Vernetzung, beispielsweise durch Elektronenstrahlen oder UV, unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Geeignete Verfahren zur Herstellung der Trägerschicht (T) sind beispielsweise in DE 10 2012 212 883 A1 beschrieben.

In einer weiteren Ausführungsform umfasst die geschäumte Schicht ein oder mehrere strahlenchemisch härtbare Polymere auf Poly(meth)acrylatbasis, wobei zur Härtung insbesondere UV-Strahlung und/oder Elektronenstrahlen genutzt werden. Derartige Schaumträgerschichten und Herstellverfahren dafür sind zum Beispiel in EP 2 403 916 B1 in den Abschnitten [0019] bis [0033], in EP 2 848 665 A1 in den Abschnitten [0098] bis [0154] und in EP 2 226 369 A1 in den Abschnitten [0020] bis [0034] offenbart.

### Klebeband

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten. Ein Klebeband weist somit eine Längsausdehnung und eine Breitenausdehnung auf. Ein Klebeband weist auch eine senkrecht zu Längs- und Breitenausdehnung verlaufende Dicke auf, wobei die Breitenausdehnung und Längsausdehnung um ein Vielfaches größer sein können als die Dicke. Die Dicke des erfindungsgemäßen Klebebands ist über die gesamte durch Länge und Breite bestimmte Flächenausdehnung des Klebebands bevorzugt im Wesentlichen gleich, insbesondere gleich.

Das erfindungsgemäße Klebeband liegt insbesondere in Bahnform vor. Unter einer Bahn wird ein Objekt verstanden, dessen Länge um ein Vielfaches größer ist als seine Breite und die Breite entlang der gesamten Länge in etwa gleichbleibend ausgebildet ist. Erfindungsgemäße Klebebänder können aufgerollt als Tellerrolle in Form einer archimedischen Spirale oder für größere Lauflängen, wie sie bei industrieller Verwendung häufig benötigt werden, in Form einer kreuzgewickelten Spule zur Verfügung gestellt werden.

Die Haftklebmasseschicht (H) kann im Aufbau des erfindungsgemäßen Klebebands ein- oder beidseitig aufgebracht sein, d.h. auf nur einer Seite der Trägerschicht (T) vorliegen oder auf beiden Seiten der Trägerschicht (T). Im letzteren Fall können die Haftklebmasseschichten (H) identisch oder unterschiedlich sein, und zwar jeweils unabhängig voneinander in ihrer chemischen Identität und in ihren Dimensionen.

Sofern nur einseitig eine Haftklebmasseschicht vorliegt, kann das Klebeband auf der der Seite mit der Haftklebmasseschicht (H) gegenüberliegenden Seite der Trägerschicht (T) frei von Klebmasse sein oder auch eine Klebmasseschicht aufweisen, die nicht einer Haftklebmasseschicht (H) entspricht und haftklebrig oder anderweitig klebfähig, zum Beispiel heißschmelzklebend bzw. heißsiegelfähig sein kann.

In einer speziellen Ausführungsform umfasst das Klebeband auf einer Seite der Trägerschicht (T) eine Haftklebmasseschicht (H) und auf der anderen Seite der Trägerschicht eine hitzeaktivierbare Klebschicht.

In einer weiteren Ausführungsform ist die Trägerschicht (T) eine hitzeaktivierbare Klebschicht, also eine Schicht, die unter Wärmeeinwirkung hinreichend erweicht, um mit einem Substrat, insbesondere einem Kunststoffsubstrat, eine Verbindung, insbesondere eine klebende oder sogar stoffschlüssige Verbindung einzugehen, die nach dem Erkalten stabil und haltbar ist. Besonders bevorzugt besteht in diesem Fall das Klebeband aus der Trägerschicht (T), wobei diese eine hitzeaktivierbare Klebschicht ist, und einer Haftklebmasseschicht (H).

In einer weiteren speziellen Ausführungsform umfasst das Klebeband auf einer Seite der Trägerschicht (T) eine außen angeordnete Haftklebmasseschicht (H) und auf der anderen Seite der Trägerschicht eine weitere Haftklebmasse, die keine Haftklebmasseschicht (H) ist und mindestens ein hydriertes Polyvinylaromaten-Polydien-Blockcopolymer umfasst. Das hydrierte Polyvinylaromaten-Polydien-Blockcopolymer ist bevorzugt ein Styrol-Ethylen-Butylen-Styrol-Blockcopolymer (SEBS) oder ein Styrol-Ethylen-Propylen-StyrolBlockcopolymer (SEPS). Das Klebeband weist in diesem Fall also einen asymmetrischen Aufbau auf.

Die Haftklebmasseschicht (H) kann nach grundsätzlich bekannten Verfahren auf die Trägerschicht (T) aufgebracht werden, beispielsweise mittels Rakelverfahren, Düsenrakelverfahren, Rollstabdüsenverfahren, Extrusionsdüsenverfahren, Gießdüsen- oder Gießerverfahren. Ebenfalls anwendbar sind Walzenauftragsverfahren, Druckverfahren, Siebdruckverfahren, Rasterwalzenverfahren, Inkjetverfahren und Sprühverfahren. Bevorzugt wird die Haftklebmasseschicht (H) aus der Schmelze mittels Extrusion und/oder Düse auf die Trägerschicht (T) aufgebracht.

Es muss sich bei dem Verfahren zum Aufbringen jedoch nicht zwingend um eine Direktbeschichtung handeln. Die Haftklebmasseschicht (H) kann auch zunächst anderweitig beschichtet werden und in einem zweiten Schritt auf die Trägerschicht (T) kaschiert werden. Gegebenenfalls können weitere Schichten oder Materiallagen anschließend inline oder offline zukaschiert oder beschichtet werden, so dass auch mehrschichtige bzw. mehrlagige Klebebandaufbauten erzeugt werden können. Insbesondere können zwischen der Haftklebmasseschicht (H) und der Trägerschicht (T) weitere Schichten vorliegen. Solche weiteren Schichten können spezielle zusätzliche Eigenschaften in das Klebeband einbringen, zum Beispiel mechanische Eigenschaften. Sie können auch die Verankerung zwischen Haftklebmasseschicht und Trägerschicht fördern oder die Migration einzelner Bestandteile aus einer Schicht in die andere verringern oder unterdrücken.

Bevorzugt beträgt die Dicke der Haftklebmasseschicht (H) 15 bis 500 µm, stärker bevorzugt 25 bis 400 µm, insbesondere 30 bis 250 µm, besonders bevorzugt 50 bis 150 µm. In besonderen Ausführungsformen beträgt die Dicke der Haftklebmasseschicht (H) 500 bis 2000 µm, bevorzugt 750 bis 1500 µm, insbesondere 900 bis 1250 µm.

Die Gesamtdicke eines erfindungsgemäßen Klebebands beträgt bevorzugt 25 µm bis 5 mm, stärker bevorzugt 50 µm bis 2 mm, insbesondere 100 bis 1500 µm.

In einer Ausführungsform umfasst ein erfindungsgemäßes Klebeband zwischen der Trägerschicht (T) und der Haftklebmasseschicht (H) eine Barriereschicht (B). Die Barriereschicht (B) dient insbesondere zur Verminderung oder Unterdrückung der Migration einzelner Bestandteile einer Schicht in die jeweils andere; sie lässt sich daher auch als Sperrschicht ansprechen. Bevorzugt umfasst die Barriereschicht (B) mindestens ein Polyamid, insbesondere ein Polyamid. Beispielsweise kann die Barriereschicht (B) eine Schicht wie in DE 196 28 177 A1 oder in US 2002/132925 A1 beschrieben sein.

In einer weiteren Ausführungsform umfasst ein erfindungsgemäßes Klebeband zwischen der Trägerschicht (T) und der Haftklebmasseschicht (H) eine Primerschicht (P), die insoweit zur Steigerung der Verankerung der Haftklebmasseschicht auf der Trägerschicht dient. Insbesondere kann die Primerschicht (P) eine Schicht wie in DE 196 28 177 A1 beschrieben sein.

### Eigenschaften und Verwendung des Klebebands

Erfindungsgemäße Klebebänder haben sich insbesondere für die Herstellung von Verklebungen auf Klarlacken, insbesondere auf nicht mittels Lösemittel vorgereinigten Klarlacken, als vorteilhaft erwiesen. Daher ist ein weiterer Gegenstand der vorliegenden Erfindung die Verwendung eines erfindungsgemäßen Klebebands zur Herstellung einer Verklebung auf einem Klarlack, bevorzugt auf einem Automobilklarlack. Stärker bevorzugt wird ein erfindungsgemäßes Klebeband zur Herstellung einer Verklebung, insbesondere einer Permanentverklebung, zwischen einem Anbauteil mit einer Oberfläche enthaltend oder bestehend aus Ethylen(co)polymer, Propylen(co)polymer, EPR, EPM und/oder EPDM mit einer Oberfläche eines Fahrzeugs, die mit einem Klarlack ausgestattet ist, verwendet. Es kann in diesem oder anderen Fällen vorteilhaft sein, wenn das Klebeband auf der Seite des Anbauteils eine Schicht einer Klebmasse, insbesondere einer Haftklebmasse aufweist, die keine Haftklebmasseschicht (H) ist.

Ebenfalls bevorzugt wird ein erfindungsgemäßes Klebeband zur Herstellung einer Verklebung, insbesondere einer Permanentverklebung, von Kunststoffen oder Metallen mit Substraten, die an ihrer zu verklebenden Oberfläche einen Klarlack aufweisen, verwendet.

Ein weiterer Gegenstand der Erfindung ist ein Verbundgegenstand aus einem mit einer Klarlackoberfläche versehenen Substrat, insbesondere einer mit einer Klarlackoberfläche versehenen Fahrzeugkarosserie, einem erfindungsgemäßen Klebeband, wobei dessen Haftklebmasseschicht (H) unmittelbar auf der Klarlackoberfläche des Substrats in Kontakt steht, und einem weiteren Substrat. Bevorzugt ist die Trägerschicht (T) des erfindungsgemäßen Klebebands dabei eine geschäumte Schicht, insbesondere eine solche mit einem Poly(meth)acrylat als Matrixpolymer.

Erfindungsgemäße Klebebänder zeichnen sich durch eine Reihe von physikalischen Eigenschaften aus, die sie für Verklebungen auf Klarlacken, aber auch auf anderen Oberflächen wie Kunststoffen, Glas, Keramik, Holz und/oder Stahl äußerst geeignet machen. Es wurde gefunden, dass diese vorteilhaften Eigenschaften auch bei hohen Temperaturen erhalten bleiben.

Bevorzugt weist ein erfindungsgemäßes Klebeband auf der Seite der Haftklebmasseschicht (H) eine Klebkraft (Peel) auf Stahl von mehr als 4,0 N/cm, stärker bevorzugt von mehr als 6,0 N/cm und insbesondere von mehr als 8,0 N/cm auf, jeweils bestimmt gemäß der hierin beschriebenen Testmethode Va.

Bevorzugt weist ein erfindungsgemäßes Klebeband auf der Seite der Haftklebmasseschicht (H) eine Klebkraft (Peel) auf PE von mehr als 2,0 N/cm, stärker bevorzugt von mehr als 3,0 N/cm und insbesondere von mehr als 4,0 N/cm auf, jeweils bestimmt gemäß der hierin beschriebenen Testmethode Vb.

Bevorzugt weist ein erfindungsgemäßes Klebeband auf der Seite der Haftklebmasseschicht (H) eine Klebkraftretention bei Verklebung auf Klarlack von mehr als 75 %, stärker bevorzugt von mehr als 85 %, insbesondere von mehr als 95 % auf, jeweils bestimmt gemäß der hierin beschriebenen Testmethode Vc.

Bevorzugt weist ein erfindungsgemäßes Klebeband auf der Seite der Haftklebmasseschicht (H) eine Wärmescherfestigkeit (shear adhesive failure temperature: SAFT) bei 200 g von mehr als 100 °C, stärker bevorzugt von mehr als 125 °C und besonders bevorzugt von mehr als 150 °C auf, jeweils bestimmt gemäß der hierin beschriebenen Testmethode VI.

Bevorzugt weist ein erfindungsgemäßes Klebeband auf der Seite der Haftklebmasseschicht (H) eine Scherstandszeit (SSZ) bei 80 °C und 0,5 g auf Stahl von mehr als 800 min, stärker bevorzugt von mehr als 1500 min und besonders bevorzugt von mehr als 10000 min auf, jeweils bestimmt gemäß der hierin beschriebenen Testmethode VII.

### Beispiele:

### I. Verwendete Chemikalien

**Tabelle 1: In den Beispielen verwendete Chemikalien**

| **Komponente** | **Chemikalie** | **Beschreibung** | **Hersteller** |
|---|---|---|---|
| Basispolymer | | | |
| | Ac1 | Poly(meth)acrylat | |
| | Calprene^{®} 711 | SBS | Dynasol Elastomers |
| | Calprene^{®} 7318 | SBS | Dynasol Elastomers |
| | Kraton^{®} D1126 | SIS | Kraton Polymers |
| | Kraton^{®} D1113 | SIS | Kraton Polymers |
| Klebharz | | | |
| | Dertophene^{®} T110 | Terpenphenolharz, Erweichungstemperatur 110 °C, OH-Zahl 30 - 60 mg KOH / g | DRT |
| | Dertophene^{®} T115 | Terpenphenolharz, Erweichungstemperatur 120 °C, OH-Zahl 45 - 65 mg KOH / g | DRT |
| | Dertophene^{®} T135 | Terpenphenolharz, Erweichungstemperatur 135 °C, OH-Zahl 50 mg KOH / g | DRT |
| | Dertophene^{®} T | Terpenphenolharz, Erweichungstemperatur 95 °C, OH-Zahl 30 - 50 mg KOH / g | DRT |
| | Dertophene^{®} H150 | Terpenphenolharz, Erweichungstemperatur 118 °C, OH-Zahl 135 - 150 mg KOH / g | DRT |
| | Dercolyte^{®} A115 | Polyterpenharz, Erweichungstemperatur 115 °C | DRT |
| | Escorez^{®} 5615 | Aromatisch modifiziertes C5-Kohlenwasserstoffharz, Erweichungstemperatur 118 °C | Exxon |
| | Regalite^{®} R1125 | Vollhydriertes C9-Kohlenwasserstoffharz, Erweichungstemperatur 125 °C | Eastman Chemical |
| | Kristalex^{®} F115 | C9-Kohlenwasserstoffharz, Erweichungstemperatur 117 °C | Eastman Chemical |
| Weichmacher | | | |
| | Wingtack^{®} 10 | Flüssiges C5-Kohlenwasserstoffharz | Cray Valley |
| | Kraton^{®} G1750 | Radiales Ethylen/Propylen-Copolymer | Kraton Polymers |
| | TerPib^{®} 2600 | Polyisobutylen | Ter Chemicals |
| Zuschlagstoffe | | | |
| | Irganox^{®} 1726 | Alterungsschutzmittel | BASF SE |
| Vernetzer | Erisys^{®} GA240 | Multifunktionelles Epoxid | Emerald Performance Materials |
| | Al-(III)-acetylacetonat | | Sigma Aldrich |

### II. Prüfmethoden

Alle Messungen wurden, sofern nichts anderes angegeben ist, bei 23 °C und 50 % rel. Luftfeuchtigkeit durchgeführt.

### Test I - Molmasse (GPC)

### (a) Peakmolmassen

GPC bietet sich als messtechnisches Verfahren zur Bestimmung der Molmasse einzelner Polymermoden in Gemischen verschiedener Polymere an. Beispielsweise sind die Molmassenverteilungen der erfindungsgemäß verwendbaren Polydien-Blockcopolymere typischerweise ausreichend eng, so dass Polymermoden, die sich Triblockcopolymeren, Diblockcopolymeren oder Multiblockcopolymeren zuordnen lassen, ausreichend voneinander aufgelöst im Elugramm auftreten. Es lässt sich dann die Peakmolmasse für die einzelnen Polymermoden aus den Elugrammen ablesen.

Peakmolmassen (Peak-MW) werden mittels Gelpermeationschromatographie (GPC) bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Ä sowie 10⁴ Å und 10⁶ Å mit jeweils ID 8,0 mm x 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt.

### (b) gewichtsmittlere Molmassen

Auch das gewichtsmittlere Molekulargewicht M_{w} wird mittels Gelpermeationschromatographie (GPC) bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Ä sowie 10⁴ Å und 10⁶ Å mit jeweils ID 8,0 mm x 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt.

### Test II - (Kleb)Harzerweichungstemperatur

Für Einzelsubstanzen: Die (Kleb)Harzerweichungstemperatur (Erw.-Punkt) wird nach der einschlägigen Methodik durchgeführt, die als Ring & Ball bekannt ist und nach ASTM E28 standardisiert ist.

### Test III - DACP

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

### Test IV - MMAP

In ein trockenes Probenglas werden 5,0 g Testsubstanz (das zu untersuchende Klebharzmuster) eingewogen und mit 10 mL trockenem Anilin (CAS [62-53-3], ≥ 99,5 %, Sigma-Aldrich #51788 oder vergleichbar) und 5 mL trockenem Methylcyclohexan (CAS [108-87-2], ≥ 99 %, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

### Test V - Klebkraft

Die Bestimmung der Klebkraft (gemäß AFERA 5001) wird wie folgt durchgeführt. Als definierter Haftgrund wird eine polierte Stahlplatte (Test Va) bzw. eine PE-Platte (Test Vb) mit einer Stärke von 2 mm eingesetzt. In einzelnen Fällen wurde eine Prüfplatte aus PP/EPM verwendet. Als Grundmaterial für die PP/EPR-Platten diente in diesen Fällen Hifax TRC 135X/4 Black der Fa. LyondellBasell. Das zu untersuchende verklebbare Flächenelement (50 µm Haftklebschicht auf 36 µm geätzter PET-Folie) wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

Klebkraftprüfungen (Test Vc) auf lackierten Oberflächen erfolgten analog, jedoch unterschied sich die Prüfkörpervorbereitung. Teststreifen (Breite 20 mm, Länge etwa 25 cm) wurden bereitgestellt, von denen ein Teil für die Verklebung auf feucht gereinigten und ein weiterer Teil auf trocken gereinigten lackierten Stahlblechen genutzt wurde. Feuchte Reinigung erfolgte durch Abwischen der Lackoberfläche mit einem in Isopropanol getränkten fusselfreien Tuch. Das Isopropanol wurde für 30 min abgedampft, bevor die Teststreifen aufgebracht wurden. Trockene Reinigung erfolgte durch Abwischen der Lackoberfläche mit einem trockenen fusselfreien Tuch. Als Prüfuntergrund dienten Stahlbleche, die mit Klarlack der Sorte 2K Progloss^{®} FF99-0535 der BASF SE lackiert waren.

### Test VI - Wärmescherfestigkeit (SAFT)

Dieser Test dient der Schnellprüfung der Scherfestigkeit der Haftklebmasseschicht (H) der Klebebänder unter Temperaturbelastung. Dafür wird die zu untersuchende Haftklebmasseschicht auf eine temperierbare Stahlplatte geklebt, mit einem Gewicht (200 g) belastet und die Scherstrecke aufgezeichnet.

Messprobenpräparation:
Die zu untersuchende Haftklebmasseschicht (50 µm Transfertape) wird mit einer der Klebmassenseiten auf eine 50 µm dicke Aluminiumfolie geklebt. Das so präparierte Klebeband wird auf eine Größe von 10 mm * 50 mm geschnitten.

Die zugeschnittene Klebebandprobe wird mit der anderen Klebmassenseite auf eine polierte, mit Aceton gereinigte Prüfplatte (Werkstoff 1.4301, DIN EN 10088-2, Oberfläche 2R, Oberflächen-Rauigkeit Rₐ = 30 bis 60 nm, Abmessungen 50 mm * 13 mm * 1,5 mm) derart verklebt, dass die Verklebungsfläche der Probe Höhe * Breite = 13 mm * 10 mm beträgt und die Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Platte derart aufgehängt, dass das länger überstehende Ende des Klebebandes senkrecht nach unten zeigt.

Messung:
Die zu messende Probe wird am unteren Ende mit einem Gewicht von 200 g belastet. Die Prüfplatte mit der verklebten Probe wird beginnend bei 25 °C mit einer Rate von 9 K/min auf die Endtemperatur von 200 °C aufgeheizt.

Beobachtet wird der Rutschweg der Probe mittels Wegmessfühler in Abhängigkeit von Temperatur und Zeit. Der maximale Rutschweg ist auf 1000 µm (1 mm) festgelegt, bei Überschreiten wird der Test abgebrochen und die Versagenstemperatur notiert. Prüfklima: Raumtemperatur 23 +/- 3 °C, relative Luftfeuchtigkeit 50 +/- 5%. Das Ergebnis ist der Mittelwert aus zwei Einzelmessungen und wird in °C angegeben.

### Test VII - Statische Scherfestigkeit

Die Scherfestigkeit bei 80°C ist ein Maß für die innere Festigkeit der Klebmasse bei erhöhter Temperatur und wird im so genannten statischen Schertest folgendermaßen geprüft: Die Prüfung erfolgt in Anlehnung an PSTC-7 bei 80 °C unter Verwendung eines Gewichtes von 0,5 kg. Ein 1,3 cm breiter Streifen des Musters (50 µm Haftklebeschicht auf 36 µm geätzter PET-Folie) wird auf einem polierten Stahlplättchen auf einer Länge von 2 cm mit einer 2 kg-Rolle durch zweimaliges doppeltes Überrollen verklebt. Die Plättchen werden für 30 min unter Testbedingungen (80 °C), aber ohne Last äquilibriert. Dann wird das Testgewicht (0,5 kg) angehängt, so dass eine Scherbeanspruchung parallel zur Verklebungsfläche entsteht, und die Zeit gemessen, bis die Verklebung versagt. Das Messergebnis wird in Minuten angegeben und bei Versagen die Versagensart (Kohäsionsbruch oder Adhäsionsbruch). Es wird der Median aus drei Einzelmessungen angegeben. Der Prüfuntergrund ist eine polierte Stahlplatte.

### Test VIII - Glasübergangstemperatur

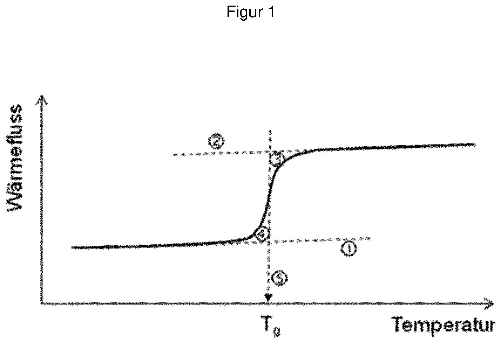

Die Glasübergangstemperatur wird mittels dynamischer Scanning Kalorimetrie (DSC) bestimmt. Dazu werden ca. 5 mg der unbehandelten Proben in ein Aluminiumtiegelchen (Volumen 25 µl) eingewogen und mit einem gelochten Deckel verschlossen. Zur Messung wird ein DSC 204 F1 der Firma Netzsch verwendet und unter Stickstoff zur Inertisierung gearbeitet. Die Probe wird zunächst auf -150 °C abgekühlt, mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergange werden als Stufen im Thermogramm erkannt. Die Glasübergangstemperatur wird folgendermaßen ausgewertet (siehe dazu Figur 1). An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur.

### Test IX- Vinyl-Anteil

Der Anteil an 1,2- und 3,4-verknüpftem konjugiertem Dien im B-Block von Vinylaromatenblockcopolymer (in der Summe Vinyl-Anteil genannt) kann mittels ¹H-NMR bestimmt werden. Zur spektroskopischen Untersuchung wurde folgendes Gerät verwendet: ¹H-NMR: Bruker AMX 500 (500.14 MHz). Als Standard diente das Lösungsmittelsignal δ (CHCl₃) =7.24 ppm. Die chemischen Verschiebungen sind immer in ppm angegeben. Die Kopplungskonstanten J sind in Hertz [Hz] angegeben. Die Signalmuster werden wie folgt angegeben: s (Singulett), bs (breites Singulett), d (Dublett), dd (Dublett vom Dublett), t (Triplett), q (Quintett), m (Multiplett).

### Test X - Anteil der Aromatenblöcke

Der Anteil der Aromatenblöcke in hydrierten Polyaromaten-Polydien-Blockcopolymeren erfolgt mittels ¹³C-NMR. Dies wird nachfolgend am Beispiel eines hydrierten Polystyrol-Polydien-Blockcopolymeren (SEBS) erläutert.

Aus dem ¹³C-Spektrum wird der Mittelwert aus zwei Integralen gebildet, nämlich dem dem Styrol-C-Signal bei ca. 144-146 ppm und dem dem Styrol-CH bei ca. 125-127 ppm entsprechenden. Dieser Mittelwert wird für SEBS in Relation zum Butylen-Integral (hydriertes 1,2-BD), nämlich dem CH₃-Signal bei ca. 10 ppm, und zum Ethylen-Integral (1,4-BD), den man aus dem Gesamt-olefinischem Integral bei ca. 20-50 ppm ausrechnen kann, gesetzt. Die so erhaltenen Anteile in mol-% werden dann in Gew.-% umgerechnet.

### III. Versuche

Es wurden eine Reihe von Haftklebmasseschichten (H) und damit ausgestatteten Klebebändern sowie entsprechende Vergleichsklebebänder hergestellt und daraus Testklebebandmuster (zu den Testklebebanddesigns siehe Abschnitt "Prüfmethoden") erzeugt. Dann wurden die in den Tabellen aufgeführten Eigenschaften getestet. Es gilt:
Versuche "E": erfindungsgemäß;
Versuche "C": Vergleichsversuche, nicht erfindungsgemäß.

Herstellung der Haftklebmasseschichten
- gemäß (H1a): Die Bestandteile der Haftklebemassen wurden hierbei 30%ig in Siedegrenzenbenzin/Toluol/Aceton gelöst und mit einem Streichbalken entweder auf eine PET-Folie ausgerüstet mit einem trennenden Silikon oder auf eine geätzte PET-Folie in der gewünschten Schichtdicke ausgestrichen. Anschließend wurde bei 100 °C für 15 min das Lösungsmittel abgedampft und so die Masseschicht getrocknet.
- gemäß (H1b): Ein für radikalische Polymerisationen unter Siedekühlung geeigneter konventioneller 2 L-Glasreaktor wurde mit 300 g einer Monomermischung, enthaltend 142,5 g Butylacrylat, 142,5 g Ethylhexylacrylat und 15 g Acrylsäure, und 200 g Aceton: Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67^{®} , Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67^{®} , gelöst in 6 g Aceton, hinzugegeben. Nach 3 Stunden wurde mit 90 g Siedegrenzenbenzin 60/95 verdünnt. Nach 5:30 Stunden Reaktionszeit wurden 0,45 g Bis-(4-tert.-Butylcyclohexanyl)-Peroxydicarbonat (Perkadox 16^{®}, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxydicarbonat (Perkadox 16^{®}, Fa Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt. Die Polymerlösung wurde mit der gewünschten Menge an Vernetzerlösung (3 Gew.-% in Aceton) versehen und mit einem Streichbalken entweder auf eine mit einem trennenden Silikon ausgerüstete PET-Folie oder auf eine geätzte PET-Folie in der gewünschten Schichtdicke ausgestrichen. Anschließend wurde bei 100 °C für 15 min das Lösungsmittel abgedampft und so die Masseschicht getrocknet und vernetzt.
- gemäß (H1c): Die zumindest zweiphasige Klebemasse wurde folgendermaßen hergestellt: Zunächst wurde eine Stammlösung des Polydien-Blockcopolymers angesetzt. Der Feststoffgehalt betrug 35 Gew.-%, als Lösungsmittelgemisch wurde Siedegrenzenbenzin 60/95: Aceton 70:30 eingesetzt (Siedegrenzbenzin 60/95 im Folgenden einfach als "Benzin" bezeichnet). Der gewünschte Anteil Stammlösung wurde einer Polyacrylat-Lösung zugesetzt. Der wie vorstehend unter "gemäß (H1b)" beschrieben erhaltenen Polyacrylat-Lösung (Polyacrylat: 47,5 % 2-Ethylhexylacrylat, 47,5 % n-Butylacrylat, 5 % Acrylsäure, Mn = 98.000 g/mol, MW = 1.100.000 g/mol) wurde die gewünschte Harzmenge zugegeben, so mit einem Lösungsmittelgemisch Benzin: Aceton 70:30 verdünnt, dass ein Endfeststoffgehalt von 35 Gew.-% resultierte, und für 12 h auf einer Rollbank gelöst. Schließlich wurde die Vernetzerlösung (3 Gew.-% in Aceton) zugegeben und das lösemittelhaltige Gemisch mit einem Streichbalken entweder auf eine mit einem trennenden Silikon ausgerüstete PET-Folie oder auf eine geätzte PET-Folie in der gewünschten Schichtdicke ausgestrichen. Anschließend wurde bei 100 °C für 15 min das Lösungsmittel abgedampft und so die Masseschicht getrocknet und vernetzt.

**Tabelle 2: Beispiele - Zusammensetzungen und Testergebnisse**

| | | E1-1 | E1-2 | C1-3 | E1-4 | C1-5 | C1-6 |
|---|---|---|---|---|---|---|---|
| Elastomer | Calprene^{®} 711 | 39,0 % | 39,0 % | 39,0 % | 30,0 % | 30,0 % | 30,0 % |
| | Calprene^{®} 7318 | 11,0 % | 11,0 % | 11,0 % | 20,0 % | 20,0 % | 20,0 % |
| Harz | Dertophene^{®} T115 | | | | 23,0 % | | |
| | Dertophene^{®} T110 | 23,0 % | 11,5 % | | | | |
| | Dertophene^{®} T135 | | 11,5 % | | | | |
| | Escorez^{®} 5615 | | | | | | 46,0 % |
| | Dercolyte^{®} A115 | 20,0 % | 20,0 % | 46,0 % | 23,0 % | 46,0 % | |
| Weichmacher | Wingtack^{®} 10 | 6,0 % | 6,0 % | 3,0 % | 3,0 % | 3,0 % | 3,0 % |
| Stabilisator | Irganox^{®} 1726 | 1,0 % | 1,0 % | 1,0 % | 1,0 % | 1,0 % | 1,0 % |
| | | | | | | | |
| Klebkraft | Stahl | 5,7 N/cm | 6,3 N/cm | 7,3 N/cm | 7,3 N/cm | 8,2 N/cm | 7,8 N/cm |
| | PE | 3,6 N/cm | 4,1 N/cm | 4,9 N/cm | 4,4 N/cm | 5,3 N/cm | 4,9 N/cm |
| Klebkraft-Retention (trocken / mit Lösemittel) | Progloss^{®} 2K PU | 6,3 N/cm / 5,9 N/cm | 6,7 N/cm / 6,2 N/cm | 2,7 N/cm / 6,8 N/cm | 8,3 N/cm / 7,0 N/cm | 1,1 N/cm / 7,8 N/cm | 1,9 N/cm / 6,2 N/cm |
| | | 107 % | 108 % | 40% | 119 % | 14% | 31% |
| SAFT (200 g) | | 131 °C | 132 °C | 143 °C | 122 °C | 129 °C | 121 °C |
| SSZ (80 °C, 0,5 kg) | Stahl | > 10000 min | > 10000 min | > 10000 min | > 10000 min | > 10000 min | > 10000 min |

**Tabelle 3: Beispiele - Zusammensetzungen und Testergebnisse**

| | | E2-1 | C2-2 | E2-3 | C2-4 |
|---|---|---|---|---|---|
| Elastomer | Calprene^{®} 711 | 39,0 % | 37,0 % | 39,0 % | 30,0 % |
| | Kraton^{®} D1113 | 11,0 % | 18,0 % | 11,0 % | |
| | Calprene^{®} 7318 | | | | 20,0 % |
| Harz | Dertophene^{®} T115 | 20,0 % | | | |
| | Dertophene^{®} T | | | 11,5 % | |
| | Dertophene^{®} T135 | | | 11,5 % | |
| | Dertophene^{®} H150 | | | | 22,5 % |
| | Dercolyte^{®} A115 | 23,0 % | 41,0 % | 20,0 % | 22,5 % |
| Weichmacher | Wingtack^{®} 10 | 6,0 % | | 6,0 % | 4,0 % |
| | TerPib^{®} 2600 | | | | |
| | Pionier^{®} 2070P | | 3,0 % | | |
| Stabilisator | Irganox^{®} 1726 | 1,0 % | 1,0 % | 1,0 % | 1,0 % |
| Klebkraft | Stahl | 6,6 N/cm | 6,0 N/cm | 6,3 N/cm | 0,13 N/cm |
| | PE | 3,8 N/cm | 2,9 N/cm | 4,1 N/cm | 0,02 N/cm |
| Klebkraft-Retention (trocken/mit Lösemittel) | Progloss^{®} 2K PU | 6,7 N/cm / 6,8 N/cm | 2,8 N/cm / 6,2 N/cm | 6,7 N/cm / 6,2 N/cm | nicht bestimmt |
| | | 99% | 45% | 108 % | |
| SAFT (200 g) | | 119 °C | 129 °C | 132 °C | 121 °C |
| SSZ (80 °C, 0,5 kg) | Stahl | 4490 min | > 10000 min | > 10000 min | 3839 min |

**Tabelle 4: Beispiele - Zusammensetzungen und Testergebnisse**

| | | E3-1 | C3-2 |
|---|---|---|---|
| Elastomer | Ac1 | 77,5 % | 77,5 % |
| Harz | Dertophene^{®} T110 | 22,5 % | |
| | Kristalex^{®} F115 | | 22,5 % |
| Vernetzer | Erisys^{®} GA240 | 0,035 % | 0,035 % |
| | Al-Chelat | 0,075 % | 0,075 % |
| Klebkraft | Stahl | 7,3 N/cm | 3,7 N/cm |
| Klebkraft-Retention (trocken/mit Lösemittel) | Progloss^{®} 2K PU | 10,9 N/cm / 11,0 N/cm | 0,38 N/cm / 0,85 N/cm |
| | | 96% | 45% |
| SAFT (200 g) | | 139 °C | 168 °C |
| SSZ (80 °C, 0,5 kg) | Stahl | > 10000 min | > 10000 min |

**Tabelle 5: Beispiele - Zusammensetzungen und Testergebnisse**

| | | E4-1 | E4-2 | E4-3 | E4-4 | C4-5 |
|---|---|---|---|---|---|---|
| Elastomer | Ac-1 | 42,5 % | 42,4 % | 42,4 % | 42,4 % | 42,4 % |
| | Kraton^{®} D1118 | 20,0 % | 20,0 % | 20,0 % | 20,0 % | 20,0 % |
| Harz | Dertophene^{®} T | 37,5 % | 18,8 % | | | |
| | Dertophene^{®} T110 | | | 18,8 % | | |
| | Dertophene^{®} T115 | | | | 18,8 % | |
| | Dercolyte^{®} A115 | | 18,8 % | 18,8 % | 18,8 % | 38,0 % |
| Vernetzer | Erisys^{®} GA240 | 0,035 % | 0,035 % | 0,035 % | 0,035 % | 0,035 % |
| | Al-Chelat | | 0,075 % | 0,075 % | 0,075 % | 0,075 % |
| Klebkraft | Stahl | | 11,4 N/cm | 11,5 N/cm | 12,3 N/cm | 7,4 N/cm |
| Klebkraft | PP/EPDM | 4,6 N/cm | 9,1 N/cm | 8,6 N/cm | 9,9 N/cm | n.b. |
| Klebkraft-Retention (trocken/mit Lösemittel) | Progloss^{®} 2K PU | 8,2 N/cm / 9,5 N/cm | 12,8N/cm / 13,4N/cm | 9,2 N/cm / 11,2 N/cm | 12,1 N/cm / 12,7 N/cm | 4,9 N/cm / 10,2 N/cm |
| | | 86% | 96% | 82% | 95% | 48% |
| SAFT (200 g) | | n.b. | 192 °C | 193 °C | 197 °C | 141 °C |
| SSZ (80 °C, 0,5 kg) | Stahl | > 10000 min | > 10000 min | > 10000 min | > 10000 min | > 10000 min |

Anhand der Beispiele in Tabelle 6 soll veranschaulicht werden, dass sich die Haftklebmasseschichten (H) ausgezeichnet als funktionelle Haftklebeschicht auf viskoelastischen Trägern aus geschäumtem Polyacrylat zur Verklebung auf einem Klarlack eignen. Als Formulierung für die funktionelle Haftklebeschicht dienten die in E5-1 bis E5-3 bzw. C5-4 aufgeführten Zusammensetzungen. Ein erstes 50 µm Transfertape dieser Haftklebemasseschicht wurde auf die erste Seite eines 800 µm dicken Trägers laminiert und ein zweites 50 µm Transfertape derselben Haftklebemasseschicht auf die gegenüberliegende Seite des Trägers. Als Schaumträger diente eine Schicht nach VT5 aus DE 10 2012 212 883 A1. Es wurde die Klebkraft im 90°-Winkel bei 23 °C und 50 % rel. Luftfeuchtigkeit bei 300 mm/min Abzugsgeschwindigkeit auf Klarlack (Materialspezifikation siehe Test Vc; das Klebeband wurde dazu nach Test V auf die Testplatte gebracht und für 72 h bei 23 °C und 50 % rel. Luftfeuchtigkeit äquilibriert) bestimmt, zum einen nach lösemittelfreier Vorreinigung und zum anderen nach Lösemittel nutzender Vorreinigung.

**Tabelle 6: Beispiele - Zusammensetzungen und Testergebnisse**

| | | E5-1 | E5-2 | E5-3 | C5-4 |
|---|---|---|---|---|---|
| Elastomer | Calprene^{®} 711 | | 30,0 % | 30,0 % | 30,0 % |
| | Calprene^{®} 7318 | 20,0 % | 20,0 % | 20,0 % | 20,0 % |
| | Ac1 | 42,5 % | | | |
| Harz | Dertophene^{®} T110 | | 23,0 % | | |
| | Dertophene^{®} T115 | 18,8 % | | 23,0 % | |
| | Dercolyte^{®} A115 | 18,8 % | 23,0 % | 23,0 % | |
| | Escorez^{®} 5615 | | | | 46,0 % |
| Weichmacher | Wingtack^{®} 10 | 5,0 % | 3,0 % | 3,0 % | 3,0 % |
| Stabilisator | Irganox^{®} 1726 | 1,0 % | 1,0 % | 1,0 % | 1,0 % |
| Vernetzer | Erisys^{®} GA240 | 0,035 % | | | |
| | Al-(III)-acetylacetonat | 0,075 % | | | |
| Klebkraft-Retention (trocken/mit Lösemittel) | Progloss^{®} 2K PU | 51,8 N/cm** / 52,1 N/cm** | 42,4 N/cm / 48,4 N/cm** | 47,0 N/cm** / 47,4 N/cm** | 8,4 N/cm / 70,9 N/cm** |
| | | 99% | 88% | 99% | 12% |

| | | | | | |
|---|---|---|---|---|---|
| **) Schaumspalten | | | | | |

## Patentansprüche

1. Klebeband zur Verklebung auf einem Lack, umfassend
- eine Trägerschicht (T), und
- eine im Aufbau des Klebebandes außen angeordnete Haftklebmasseschicht (H) umfassend:
∘ (H1) mindestens ein Polymer ausgewählt aus Poly(meth)acrylaten und Polydien-Blockcopolymeren oder mindestens einen Blend aus mindestens einem Poly(meth)acrylat und mindestens einem Polydien-Blockcopolymer; und
∘ (H2) eine Klebharzkomponente, umfassend mindestens ein Terpenphenolharz;
**dadurch gekennzeichnet, dass** das Terpenphenolharz eine Erweichungstemperatur, bestimmt mit der Ring-and-Ball-Methode gemäß ASTM E28, von maximal 140 °C aufweist.

2. Klebeband gemäß Anspruch 1, **dadurch gekennzeichnet, dass** die Haftklebmasseschicht (H1) mindestens ein Polyvinylaromat-Polydien-Blockcopolymer mit einem Aufbau der Form A-B-A, (A-B)ₙ , (A-B)ₙX oder (A-B-A)ₙX umfasst, worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation eines oder mehrerer konjugierter Diene mit 4 bis 18 C-Atomen;
- X für den Rest eines Kopplungsreagenzes oder multifunktionellen Initiators und
- n für eine ganze Zahl ≥ 2 stehen; und
der mittlere Diblock-Anteil der Polyvinylaromat-Polydien-Blockcopolymere, bezogen auf die Gesamtheit aller Polyvinylaromat-Polydien-Blockcopolymere der Haftklebmasseschicht (H), maximal 40 Gew.-% beträgt.

3. Klebeband gemäß einem der vorstehenden Ansprüche, **dadurch gekennzeichnet, dass** die Haftklebmasseschicht (H1) mindestens ein Polyvinylaromat-Polydien-Blockcopolymer mit einem Aufbau der Form A-B-A, (A-B)ₙ , (A-B)ₙX oder (A-B-A)ₙX umfasst, worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation eines oder mehrerer konjugierter Diene mit 4 bis 18 C-Atomen;
- X für den Rest eines Kopplungsreagenzes oder multifunktionellen Initiators und
- n für eine ganze Zahl ≥ 2 stehen; und
die Polydienblöcke der Polyvinylaromat-Polydien-Blockcopolymere einen mittleren Vinyl-Anteil, ermittelt durch den hierin beschriebenen Test IX, von weniger als 20 Gew.-%, bezogen auf die Gesamtheit aller Polydienblöcke der Haftklebmasseschicht (H), aufweisen.

4. Klebeband gemäß einem der vorstehenden Ansprüche, **dadurch gekennzeichnet, dass** das Terpenphenolharz eine Erweichungstemperatur, bestimmt mit der Ring-and-Ball-Methode gemäß ASTM E28, von mindestens 95 °C aufweist.

5. Klebeband gemäß einem der vorstehenden Ansprüche, **dadurch gekennzeichnet, dass** die Klebharzkomponente ein oder mehrere weitere Klebharze ausgewählt aus der Gruppe bestehend aus weiteren Terpenphenolharzen; Kolophoniumharzen; hydrierten Polymerisaten des Dicyclopentadiens; partiell, selektiv oder vollständig hydrierten Kohlenwasserstoffharzen auf Basis von C5-, C5/C9- oder C9-Monomerströmen; Polyterpenharzen auf Basis von α-Pinen und/oder β-Pinen und/oder δ-Limonen und/oder Δ3-Caren; hydrierten Polymerisaten von C8- und C9-Aromaten; sowie Acrylat- und/oder Methacrylatharzen umfasst.

6. Klebeband gemäß einem der vorstehenden Ansprüche, **dadurch gekennzeichnet, dass** die Trägerschicht (T) ein Schaumträger umfassend mindestens ein Poly(meth)acrylat als Matrixpolymer ist.

7. Verwendung eines Klebebands gemäß einem der Ansprüche 1 bis 6 zur Herstellung einer Verklebung auf einem Klarlack.

8. Verbundgegenstand aus einem mit einer Klarlackoberfläche versehenen Substrat, einem Klebeband gemäß einem der Ansprüche 1 bis 6, wobei dessen Haftklebmasseschicht (H) unmittelbar auf der Klarlackoberfläche des Substrats in Kontakt steht, und einem weiteren Substrat.
